# EUROPÄISCHE PATENTANMELDUNG

(11) **EP 4 796 783 A1**
(43) Veröffentlichungstag der Anmeldung: **26.08.2026**
(21) Anmeldenummer: 25160110.0
(22) Anmeldetag: 25.02.2025
(51) Int. Cl.: F03D 17/00

(54) **IDENTIFIZIEREN EINER ROTORUNWUCHTKONSTELLATION EINES ROTORS EINER WINDENERGIEANLAGE**

(71) Anmelder: Wobben Properties GmbH, 26607 Aurich (DE)
(72) Erfinder: Schaper, Ulf, 27254 Staffhorst (DE); Giesler, Matthias, 26603 Aurich (DE)
(74) Vertreter: Eisenführ Speiser

(57) **Zusammenfassung**

Die Erfindung betrifft ein Verfahren zum Identifizieren einer Rotorunwuchtkonstellation eines Rotors einer Windenergieanlage, und umfasst das Erfassen von Schwingungssignalen als zeitliche Signalverläufe über einen Erfassungszeitraum, wobei wenigstens ein Längsschwingungssignal erfasst wird, das eine Schwingung des Turmes in einer Längsrichtung, längs zur Rotorachse wiedergibt, und/oder ein Querschwingungssignal erfasst wird, das eine Schwingung des Turmes in einer Querrichtung, quer zur Rotorachse wiedergibt. Ferner umfasst das Verfahren das Bestimmen von 1P-Komponenten aus den erfassten Schwingungssignalen, wobei jeweils eine 1P-Längsschwingungskomponente aus dem Längsschwingungssignal bestimmt wird und/oder eine 1P-Querschwingungskomponente aus dem Querschwingungssignal bestimmt wird, wobei die 1P-Komponenten so bestimmt werden, dass sie jeweils eine Information über Betrag und Phase enthalten, und sich die Phase jeweils auf eine Drehposition des Rotors bezieht. Außerdem umfasst das Verfahren das Bestimmen der Unwuchtkonstellation aus den 1P-Komponenten, wobei die Unwuchtkonstellation eine Massenunwucht und eine Blattwinkelunwucht, , umfassen kann, und das Bestimmen der Unwuchtkonstellation in Abhängigkeit von wenigstens einem Unwuchtmodell erfolgt.

## Beschreibung

Die vorliegende Erfindung betrifft ein Verfahren zum Identifizieren einer Rotorunwuchtkonstellation eines Rotors, also aerodynamischen Rotors, einer Windenergieanlage. Ebenfalls betrifft die vorliegende Erfindung eine Windenergieanlage, in der ein entsprechendes Verfahren angewendet wird, insbesondere implementiert ist.

Windenergieanlagen sind bekannt, sie erzeugen elektrische Leistung aus Wind, üblicherweise mit einem Horizontalachsenrotor, der um eine etwa waagerechte Achse rotiert und mehrere Rotorblätter aufweist, meist drei. Diese Rotorblätter nehmen Leistung aus dem Wind auf und wandeln diese in eine Drehbewegung des aerodynamischen Rotors um, die wiederum einen Generator antreibt. Solche aerodynamischen Rotoren, die nachfolgend vereinfachend als Rotoren bezeichnet werden, sind heutzutage in Größenordnungen mit einem Rotordurchmesser weit über 100 m üblich.

Rotorunwuchten können bei solchen großen Rotoren leicht auftreten und zu erheblichen Lasten an diversen Komponenten einer Windenergieanlage und damit Belastungen der gesamten Windenergieanlage führen. Durch solche Rotorunwuchten entstehen nicht nur Belastungen der Rotorlager, Pitchlager bzw. Azimutlager, sondern es können auch Schwingungen an diversen Komponenten der Windenergieanlage ausgelöst werden oder verstärkt werden. Besonders Turmschwingungen kommen hier in Betracht, wobei besonders Schwingungen im Bereich von Resonanzfrequenzen problematisch sein können.

Um solchen Massenunwuchten des Rotors entgegenzuwirken, kann beispielsweise versucht werden, den Rotor durch Anordnung entsprechender Gewichte an den Rotorblättern auszuwuchten.

Es kommen aber auch sogenannte aerodynamische Unwuchten des Rotors in Betracht, die sich daraus ergeben, dass es aerodynamische Abweichungen zwischen den Rotorblättern gibt. Diese können auch dadurch bedingt sein, dass es zwischen den Blattwinkeln, insbesondere den Einstellwinkeln der Rotorblätter untereinander Abweichungen gibt.

Auch zur Kompensation von aerodynamischen Unwuchten des Rotors kann ein Auswuchten erfolgen, insbesondere durch entsprechende Verstellung der Rotorblätter in ihrem Blattwinkel.

Problematisch ist aber, dass die Massenunwuchten und die aerodynamischen Unwuchten des Rotors überlagert sein können und sich auch nicht unbedingt ausschließlich nur aus den beiden genannten Effekten ergeben müssen. Für eine erfolgreiche Auswuchtung ist aber eine sehr gute Kenntnis der Unwuchtsituation, die nachfolgend auch als Rotorunwuchtkonstellation bezeichnet werden kann, notwendig.

Der vorliegenden Erfindung liegt somit die Aufgabe zugrunde, zumindest eines der vorgenannten Probleme zu adressieren. Insbesondere soll eine Lösung geschaffen werden, Unwuchten möglichst gut zu identifizieren, insbesondere in Bezug auf deren Ursache und deren Umfang, um darauf basierend entsprechende Gegenmaßnahmen, insbesondere ein Auswuchten, durchführen zu können. Zumindest soll zu bisher bekannten Lösungen eine Alternative vorgeschlagen werden.

Erfindungsgemäß wird ein Verfahren nach Anspruch 1 vorgeschlagen. Es wird somit ein Verfahren zum Identifizieren einer Rotorunwuchtkonstellation eines Rotors einer Windenergieanlage vorgeschlagen. Die zugrunde gelegte Windenergieanlage weist einen Turm mit einem Turmkopf und den Rotor auf, wobei der Rotor eine Rotorachse und mehrere in ihrem Blattwinkel verstellbare Rotorblätter aufweist. Eine Rotorunwuchtkonstellation ist insoweit eine Konstellation, die sowohl Massenunwuchten als auch aerodynamische Unwuchten enthalten kann, sie kann vereinfachend und synonym auch als Unwuchtkonstellation bezeichnet werden. Zu Beginn der Identifikation kann aber noch offen sein, ob und in welchem Umfang sowohl Massenunwuchten als auch aerodynamische Unwuchten vorkommen.

Erfindungsgemäß wird vorgeschlagen, zunächst Schwingungssignale als zeitliche Signalverläufe über einen Erfassungszeitraum zu erfassen, wobei ein Längsschwingungssignal und ein Querschwingungssignal des Turmkopfes erfasst werden.

Das Längsschwingungssignal gibt eine Schwingung des Turmes, insbesondere im Bereich des Turmkopfes in einer Längsrichtung wieder, also bezogen auf eine Längsrichtung der Gondel, nämlich in Richtung, also in Längsrichtung einer Rotorachse des aerodynamischen Rotors. Mit anderen Worten ist eine Längsschwingung eine Schwingung, bei der der Turm vor- und zurückschwingt, also zum Wind hin und vom Wind wieder zurück.

Das Querschwingungssignal gibt eine Schwingung des Turmes in einer Querrichtung wieder. Eine Querschwingung, also eine Schwingung des Turmes in Querrichtung ist insoweit quer zur Rotorachse und dabei quer zur Längsrichtung. Mit anderen Worten ist eine Schwingung in Querrichtung ein seitliches Hin- und Herschwingen.

Es wird somit eine Längsschwingung, also eine Schwingung vor und zurück, und eine Querschwingung des Turmkopfes, also eine seitliche Schwingung, erfasst.

Es kommt aber auch in Betracht, nur jeweils ein Längsschwingungssignal oder ein Querschwingungssignal zu erfassen, wenn z.B. das jeweils andere Schwingungssignal bereits erfasst wurde, oder andere Informationen zu einer Schwingungsrichtung bereits vorliegen. Die beiden Schwingungssignale können auch zeitlich aufeinanderfolgend erfasst werden. Vorzugsweise werden aber jeweils ein Längsschwingungssignal und ein Querschwingungssignal parallel erfasst, insbesondere zeitgleich. Das Erfassen eines Längsschwingungssignals und eines Querschwingungssignals kann auch jeweils wiederholt werden, sodass dann jeweils mehrere Signalverläufe vorliegen.

Aus den erfassten Schwingungssignalen werden jeweils die darin enthaltenen 1P-Komponenten bestimmt. Das Schwingen mit einer 1P-Komponente kann auch als Schwingung mit einer Grundfrequenzkomponente bezeichnet werden oder mit einer Rotordrehzahlkomponente, also einer Komponente, die in ihrer Schwingfrequenz der Rotordrehzahl entspricht.

Es wird dabei eine 1P-Längsschwingungskomponente aus dem Längsschwingungssignal bestimmt und eine 1P-Querschwingungskomponente aus dem Querschwingungssignal. Es gibt dann also wenigstens eine 1P-Längsschwingungskomponente und/oder eine 1P-Querschwingungskomponente. Diese 1P-Komponenten werden aus den jeweiligen erfassten Schwingungsverläufen mit der jeweils zugehörigen Schwingungsrichtung bestimmt. Die 1P-Komponenten werden dabei so bestimmt, dass sie jeweils eine Information über den Betrag und die Phase enthalten, wobei sich die Phase jeweils auf eine Drehposition des Rotors bezieht. Jede 1P-Komponente ist dann somit nach Betrag und Phase bekannt und wird in diesem Sinne der weiteren Bearbeitung zugrunde gelegt. Der Betrag und die Phase der 1P-Komponente können dabei ausdrücklich angegeben sein; es kommt aber auch in Betracht, eine Darstellung jeweils als komplexe Zahl zu wählen, also als Zahl in der komplexen Zahlenebene mit einem Realteil und einem Imaginärteil.

Es wird dann weiter vorgeschlagen, dass die Unwuchtkonstellation aus den 1P-Komponenten bestimmt wird, wobei die Unwuchtkonstellation eine Massenunwucht und eine Blattwinkelunwucht, die eine aerodynamische Unwucht bezeichnet, umfassen kann. Grundsätzlich gibt die Unwuchtkonstellation die Massenunwucht und die Blattwinkelunwucht zusammen wieder; es kommt aber natürlich auch in Betracht, dass ein Rotor gar keine oder keine nennenswerte Massenunwucht hat oder gar keine oder keine nennenswerte Blattwinkelunwucht hat. Die entsprechenden Werte könnten dann null sein. Das Verfahren ist aber so aufgebaut, dass es grundsätzlich die beiden genannten Unwuchtarten, also Massenunwucht und Blattwinkelunwucht, erkennen und auch identifizieren, insbesondere quantifizieren kann. Es ist auch möglich, wenn auch nicht bevorzugt, nur jeweils eine Schwingungsrichtung zu betrachten.

Weiter wird vorgeschlagen, dass das Bestimmen der Unwuchtkonstellation in Abhängigkeit von wenigstens einem Unwuchtmodell erfolgt. Es wird also ein Unwuchtmodell zugrunde gelegt. Das Unwuchtmodell kann die Windenergieanlage beschreiben und einen Zusammenhang zwischen Unwuchten und resultierenden Schwingungen nachbilden. Dabei können Unwuchten der Art nach, besonders, ob sie Massenunwuchten oder aerodynamische Unwuchten betreffen, den Schwingungen auch hinsichtlich der Schwingungsrichtung zugeordnet werden. Besonders kann vorgesehen sein, die Schwingungen des Unwuchtmodells mit den erfassten Schwingungen, nämlich insbesondere mit der 1P-Längsschwingungskomponente und der 1P-Querschwingungskomponente, zu vergleichen oder in Bezug zu setzen und daraus die Unwuchtsituation, also die Unwuchtkonstellation, abzuleiten.

Es kommt besonders in Betracht, dass Unwuchtparameter in dem Unwuchtmodell so lange variiert werden, bis das Anlagenverhalten, besonders bei Auftreten der 1P-Längsschwingungskomponente und/oder der 1P-Querschwingungskomponente, dem im Unwuchtmodell entspricht. Dann kann davon ausgegangen werden, dass die Unwuchten, die dann in dem Unwuchtmodell durch die gewählten Unwuchtparameter eingestellt sind, auch real an der untersuchten Windenergieanlage vorliegen.

Gemäß einem Aspekt wird vorgeschlagen, dass das wenigstens eine Unwuchtmodell jeweils eine Unwuchtkonstellation mit zugehörigen 1P-Komponenten umfasst, die vorbestimmt sind oder bestimmbar sind. Das Unwuchtmodell umfasst somit die Unwuchtkonstellation mit zugehörigen 1P-Komponenten. Über die an der Windenergieanlage erfassten 1P-Komponenten kann dann über die 1P-Komponenten des Unwuchtmodells die Unwuchtkonstellation gefunden werden.

Insbesondere wird vorgeschlagen, das wenigstens eine Unwuchtmodell als Referenz zu verwenden, um unter Berücksichtigung des wenigstens einen Unwuchtmodells und den aus den erfassten Schwingungssignalen bestimmten 1P-Komponenten auf die zu identifizierende Rotorunwuchtkonstellation an der zu untersuchenden Windenergieanlage zu schließen, oder sich ihr zumindest anzunähern. Damit kann der beschriebene Fall realisiert werden, aus den erfassten 1P-Komponenten, die also aus den erfassten Schwingungssignalen bestimmt wurden, über die 1P-Komponenten des Unwuchtmodells die Unwuchtkonstellation in dem Unwuchtmodell bzw. mithilfe des Unwuchtmodells zu finden. Das Unwuchtmodell bildet insoweit eine Referenz zur untersuchten Windenergieanlage, wird also zum Vergleich verwendet.

Gemäß einem Aspekt wird vorgeschlagen, die 1P-Komponenten jeweils mit Betrag und Phase zu bestimmen bzw. zu verwenden. Besonders kann jede 1P-Komponente dadurch kompakt dargestellt und auch zur weiteren Bestimmung der Unwuchtkonstellation im Zusammenhang mit dem Unwuchtmodell verwendet werden.

Es kommt aber auch in Betracht, die 1P-Komponente als komplexe Zahl mit Real- und Imaginärteil zu bestimmen und damit, insbesondere auch unter Verwendung des Unwuchtmodells, die Unwuchtkonstellation zu finden. Insbesondere ist das Unwuchtmodell, wenn es zur Identifikation der Unwuchtkonstellation verwendet wird, entsprechend daran angepasst, die 1P-Komponenten nach Betrag und Phase oder als komplexe Zahl zu verwenden. Insbesondere liegen zu Unwuchtkonstellationen in dem Unwuchtmodell zugehörige 1P-Komponenten entsprechend mit Betrag und Phase oder als komplexe Zahl mit Real- und Imaginärteil vor. Natürlich kann auch ein Unwuchtmodell verwendet werden, das beide Arten der Darstellung verwenden kann.

Gemäß einem Aspekt wird vorgeschlagen, dass zusammen mit dem Erfassen des Längsschwingungssignals und/oder des Querschwingungssignals ein Rotorpositionssignal über denselben Erfassungszeitraum als zeitlicher Verlauf einer Rotorposition in Drehrichtung des Rotors erfasst wird und das Bestimmen der 1P-Längsschwingungskomponente aus dem Längsschwingungssignal und der 1P-Querschwingungskomponente aus dem Querschwingungssignal jeweils in Abhängigkeit von dem Rotorpositionssignal erfolgt.

Jede 1P-Komponente bezieht sich auf die Drehung des Rotors, denn die 1P-Komponente ist die Grundfrequenzkomponente bezogen auf die Rotordrehzahl. Insoweit wird vorgeschlagen, die 1P-Komponenten in Abhängigkeit von dem Rotorpositionssignal durchzuführen. In den 1P-Komponenten ist als Information aber auch eine Phasenlage enthalten und diese bezieht sich auf die Rotorstellung und damit das Rotorpositionssignal.

Hier ist besonders relevant, eine absolute Position des Rotorpositionssignals zu definieren und zu erfassen. Dazu kann eine Nullposition bestimmt und festgelegt werden, die einen solchen Nullpunkt als Referenz festlegt. Darauf basierend kann dann auch die Phase der jeweiligen 1P-Komponenten festgelegt werden.

Gemäß einer Option wird vorgeschlagen, als Nullposition eine Rotorposition zu verwenden, bei der ein Lastsignal bei einer Lastmessung im Leerlauf sein Vorzeichen ändert. Hier geht es besonders um eine Lastmessung, mit der ein Lastsensor oder mehrere Lastsensoren kalibriert werden können. Im Leerlauf erfährt der Rotor keine oder vernachlässigbar geringe Kraft aus dem Wind, besonders so wenig Kraft, dass er sich gerade eben noch dreht. Die einzige oder zumindest Hauptlast auf dem Rotorblatt ist dann die Gravitation. Die Lastsensoren sind dabei besonders an der Blattwurzel angeordnet und erfassen eine Kraft auf die Rotorblätter in Drehrichtung, also nicht in Schlagrichtung. Wenn im Leerlauf nur noch die Gravitationskraft wirkt, weist diese über die Drehposition des Rotors einen sinusförmigen Verlauf auf. Mit anderen Worten ist die Gravitationskraft null, wenn das betreffende Blatt in 12-Uhr- oder 6-Uhr-Stellung steht. Dann wechselt die erfasste Kraft ihr Vorzeichen. Aus der Richtung des Vorzeichenwechsels ist auch erkennbar, ob die 12-Uhr- oder 6-Uhr-Stellung vorliegt. Somit kann hierdurch eine Nullposition des Rotors gut identifiziert und zugrunde gelegt werden.

Gemäß einem Aspekt wird vorgeschlagen, dass das Erfassen der Schwingungssignale und optional das Erfassen des Rotorpositionssignals, und das Bestimmen der 1P-Komponenten, gegebenenfalls in Abhängigkeit von dem Rotorpositionssignal, für weitere Erfassungszeiträume wiederholt wird, sodass mehrere 1P-Komponenten, insbesondere mehrere 1P-Komponentenpaare bestimmt werden, jeweils wenigstens eine 1P-Komponente bzw. ein 1P-Komponentenpaar für jeden Erfassungszeitraum, wobei jedes 1P-Komponentenpaar eine 1P-Längsschwingungskomponente und eine 1P-Querschwingungskomponente aufweist.

Für jeden Erfassungszeitraum liegt also wenigstens eine 1P-Komponente vor, insbesondere ein 1P-Komponentenpaar vor. Dadurch kann besonders die Genauigkeit erhöht werden bzw. können Erfassungsfehler herausgemittelt werden. Es kommt auch in Betracht, dass von vielen 1P-Komponenten bzw. 1P-Komponentenpaaren manche unter geeigneteren Bedingungen aufgenommen wurden als andere. Beispielsweise können 1P-Komponentenpaare, die bei sehr böigem Wind aufgenommen wurden, vielleicht weniger geeignet sein, um nur ein Beispiel zu nennen. Solche weniger geeigneten oder ungeeigneten 1P-Komponenten bzw. 1P-Komponentenpaare können herausgenommen werden oder über die Wiederholung der Erfassung über eine große Anzahl Umdrehungen können sie herausgemittelt werden.

Besonders wird vorgeschlagen, das Erfassen wenigstens 10-mal, insbesondere wenigstens 50-mal zu wiederholen. Hier ist zu berücksichtigen, dass eine Rotorunwucht, sei es eine Massenunwucht oder eine aerodynamische Unwucht, oftmals für die Windenergieanlage nicht unmittelbar gefährdend sind, lediglich nicht dauerhaft wirken sollten. Insoweit wurde erkannt, dass für wenigstens zehn oder sogar wenigstens 50 Wiederholungen ausreichend Zeit ist, sodass diese Wiederholungen hier zur Verbesserung der Qualität vorgeschlagen werden.

Gemäß einem Aspekt wird vorgeschlagen, dass für mehrere Erfassungszeiträume und unterschiedliche Windgeschwindigkeiten jeweils die Schwingungssignale erfasst und daraus jeweils 1P-Komponentenpaare bestimmt werden und die so bestimmten 1P-Komponentenpaare in Abhängigkeit von der Windgeschwindigkeit, bei der die zugehörigen Schwingungssignale jeweils erfasst wurden, in Bins einsortiert werden und das Bestimmen der Unwuchtanteile in Abhängigkeit von den in Bins eingeteilten 1P-Komponentenpaaren erfolgt. Es kommt auch in Betracht, die 1P-Komponenten nicht paarweise aufzunehmen und/oder abzuspeichern, sondern je Schwingungsrichtung unabhängig voneinander. Es ist aber wesentlich effizienter und zweckmäßiger, paarweise vorzugehen.

Dadurch kann über eine lange Zeitdauer, für mehrere Erfassungszeiträume, insbesondere für sehr viele Erfassungszeiträume, wie über 50 Erfassungszeiträume; das Erfassen der Schwingungssignale und daraus das Bestimmen der 1P-Komponenten bzw. 1P-Komponentenpaare durchgeführt werden. Dabei können die Bedingungen, insbesondere die Windgeschwindigkeit, variieren. Vorteilhaft ist es aber, 1P-Komponentenpaare bzw. überhaupt 1P-Komponenten bei möglichst ähnlichen Bedingungen zu bestimmen. Das wird dadurch erreicht, dass die erfassten Schwingungssignale gleicher oder ähnlicher Windgeschwindigkeiten zusammengefasst werden. Das erfolgt in sogenannten Bins. Das können entsprechenden Windgeschwindigkeitsbereichen zugeordnete Speicherplätze sein, um es anschaulich zu erläutern.

Es kann dann jeweils für die erfassten Schwingungssignale und dazu bestimmten 1P-Komponentenpaare jeweils eines Bins ausgewertet werden. Die Auswertung erfolgt mittels eines Unwuchtmodells und das Unwuchtmodell kann selbst ebenfalls Windgeschwindigkeiten berücksichtigen. Das Unwuchtmodell kann also besonders jeweils für eine Windgeschwindigkeit eingesetzt werden. Für diese Windgeschwindigkeit können die Parameter in dem Unwuchtmodell angepasst werden, bis die 1P-Komponentenpaare, die sich in dem Unwuchtmodell ergeben, den 1P-Komponentenpaaren möglichst entsprechen, die sich aus den erfassten Schwingungssignalen der entsprechenden Bins ergeben.

Das Unwuchtmodell kann hier auch auf andere Art und Weise angewendet werden, z. B. indem eine Skalierung von 1P-Komponentenpaaren des Unwuchtmodells auf die aus den erfassten Schwingungssignalen bestimmten 1P-Komponentenpaare erfolgt, um nur ein weiteres Beispiel zu nennen. Die dem jeweiligen Bin zugrundeliegende Windgeschwindigkeit sollte natürlich auch bei dem Unwuchtmodell verwendet werden.

Gemäß einem Aspekt wird vorgeschlagen, dass mehrere Unwuchtmodelle mit unterschiedlichen Unwuchtkonstellationen verwendet werden und die Unwuchtmodelle überlagert werden, indem ihre Unwuchtkonstellationen zu einer gemeinsamen Unwuchtkonstellation als Prüfunwuchtkonstellation überlagert werden und die zugehörigen 1P-Komponenten zu wenigstens einer 1P-Vergleichskomponente oder 1P-Vergleichskomponenten-Paar überlagert werden. Die zugehörigen 1P-Komponenten sind also die 1P-Komponenten der Modelle und können, auch ganz generell, also in allen anderen Ausführungsformen, als 1P-Modellkomponenten bezeichnet werden. Es werden also die 1P-Modellkomponenten zu wenigstens einer 1P-Vergleichskomponente oder 1P-Vergleichskomponenten-Paar überlagert.

Das kann bedeuten, was auch der Veranschaulichung dient, dass ein Unwuchtmodell eine aerodynamische Unwucht modelliert. In dem Unwuchtmodell ergeben sich dann Schwingungen, die eine 1P-Komponente für Längsschwingungen aufweist. In dem Unwuchtmodell kann die aerodynamische Unwucht verändert werden, wodurch sich die 1P-Komponente in Längsschwingungsrichtung verändert.

Gleichzeitig kann ein weiteres Unwuchtmodell eine Massenunwucht aufweisen und damit ergeben sich dann ebenfalls Schwingungen, nämlich insbesondere in Querrichtung, und somit auch eine 1P-Komponente in Querrichtung. Veränderungen dieser Massenunwucht verändern auch die 1P-Komponente in Querschwingungsrichtung.

Die Überlagerung dieser Unwuchtkonstellationen würde bedeuten, dass die gemeinsame Unwuchtkonstellation, die hier als Prüfunwuchtkonstellation bezeichnet wird, die aerodynamische Unwucht und die Massenunwucht aufweist. Zu dieser Prüfunwuchtkonstellation gehört dann ein 1P-Vergleichskomponentenpaar, das somit die beiden 1P-Komponenten, also in Längsschwingungsrichtung und Querschwingungsrichtung, umfasst.

Es kommt aber auch in Betracht, dass die Unwuchtmodelle insgesamt überlagert werden und auch gegenseitige Beeinflussungen zwischen Quer- und Längsschwingungen berücksichtigen, soweit diese vorhanden sind. Dennoch können jeweils in dem Unwuchtmodell die aerodynamische Unwucht und die Massenunwucht voneinander unabhängig verändert werden, wodurch sich die zugehörigen 1P-Komponenten verändern. Gegenseitige Beeinflussungen können dabei in einem entsprechenden Unwuchtmodell ebenfalls berücksichtigt werden.

Darauf aufbauend wird nun weiter vorgeschlagen, die Unwuchtkonstellationen der einzelnen Unwuchtmodelle in ihrer Amplitude zu verändern, also bspw. eine Unwuchtmasse im Modell vergrößern, oder einen Blattwinkel im Unwuchtmodell verändern, um dadurch die Prüfunwuchtkonstellation und die 1P-Vergleichskomponenten zu variieren. Dazu wird vorgeschlagen, die Unwuchtkonstellationen der Unwuchtmodelle derart zu verändern, dass die sich damit verändernden 1P-Vergleichskomponenten möglichst gut mit den aus den erfassten Schwingungssignalen bestimmten 1P-Komponenten übereinstimmen. Insbesondere wird vorgeschlagen, dass die Prüfunwuchtkonstellation, die zur besten Übereinstimmung zwischen den 1P-Vergleichskomponenten und den aus den erfassten Schwingungssignalen bestimmten 1P-Komponenten führt, als zu identifizierende Rotorunwuchtkonstellation verwendet wird.

Mit anderen Worten können also die aerodynamische Unwucht und die Massenunwucht jeweils in dem Unwuchtmodell verändert werden, woraus sich als Ergebnis die Schwingungen und damit die 1P-Vergleichskomponenten verändern. Die 1P-Komponenten, die aus den erfassten Schwingungssignalen bestimmt wurden, liegen ja aufgrund der Messungen an der Windenergieanlage vor. An diese sollen die 1P-Vergleichskomponenten des Unwuchtmodells so gut wie möglich angepasst werden, nämlich durch das Verändern der aerodynamischen Unwucht und der Massenunwucht.

Wenn dann nach einigen Veränderungen die 1P-Vergleichskomponenten möglichst gut mit den aus den erfassten Schwingungssignalen bestimmten 1P-Komponenten übereinstimmen, entspricht die Prüfunwuchtkonstellation des Unwuchtmodells entsprechend gut der tatsächlich real an der Windenergieanlage vorhandenen Unwuchtkonstellation, also der zu identifizierenden Unwuchtkonstellation. Somit kann durch dieses Verfahren die Rotorunwuchtkonstellation bestimmt werden.

Jede 1P-Komponente des Unwuchtmodells, also 1P-Vergleichskomponente, enthält, wenn auch nicht unbedingt in dieser Art der Darstellung, einen Betrag und eine Phase. Entsprechend können Betrag und Phase sowohl der aerodynamischen Unwucht als auch der Massenunwucht jeweils in dem Unwuchtmodell verändert werden.

Eine Möglichkeit wäre auch, zunächst die Unwucht hinsichtlich ihrer Position in Drehrichtung zu verändern, um dadurch die Phase der 1P-Vergleichskomponenten zu verändern. Liegen die Phasen der 1P-Vergleichskomponenten im Wesentlichen übereinstimmend mit den Phasen der erfassten 1P-Komponenten, kann dann noch die Amplitude der Unwuchten verändert werden. Dadurch verändert sich im Wesentlichen der Betrag der resultierenden Vergleichskomponenten.

Insoweit die Phasen durch die Veränderung der Amplitude nicht oder nicht signifikant verändert werden, kommt auch in Betracht, die Ergebnisse entsprechend zu skalieren. Sind also die Phasen der 1 P-Vergleichskomponenten und der erfassten 1P-Komponenten übereinstimmend, die Amplituden der 1P-Vergleichskomponenten aber, um ein sehr einfaches Beispiel zu nennen, jeweils nur halb so groß wie die erfassten 1P-Komponenten, kann angenommen werden, dass die zu identifizierenden Rotorunwuchten die doppelte Amplitude der zuletzt verwendeten Unwuchten des Unwuchtmodells haben.

Der Gedanke der Skalierung kann aber auch so umgesetzt werden, dass aus der Skalierung berechnet werden kann, wie groß die Amplitude der jeweiligen Unwuchten im Unwuchtmodell gewählt werden müsste, und sie dann entsprechend im Unwuchtmodell gewählt werden, sodass dann das Unwuchtmodell sehr ähnliche 1P-Vergleichskomponenten aufweisen müsste.

Insoweit das System, also die Windenergieanlage und entsprechend das Unwuchtmodell aber nicht-linear sind, und diese Nichtlinearitäten nicht vernachlässigt werden können, so könnte nun noch eine Abweichung herauskommen, und es könnte erneut nachjustiert werden, um sich einem guten Ergebnis zu nähern. Die aus den erfassten Schwingungssignalen bestimmten 1P-Komponenten sind hier vereinfacht auch als erfasste 1P-Komponenten bezeichnet worden.

Gemäß einem Aspekt wird vorgeschlagen, dass vier Unwuchtmodelle zum Bestimmen der Unwuchtkonstellation verwendet werden, von denen ein erstes Unwuchtmodell eine erste Massenunwucht an einem ersten Rotorblatt aufweist und ein zweites Unwuchtmodell eine zweite Massenunwucht an einem zweiten Rotorblatt aufweist, wobei die erste Massenunwucht an dem ersten Rotorblatt und die zweite Massenunwucht an dem zweiten Rotorblatt vorzugsweise gleich groß sind.

Hier liegt besonders die Erkenntnis zugrunde, dass zumindest in relevanten Bereichen in Bezug auf die Massenunwuchten eine Linearität vorliegt. Besonders führt, um es anschaulich zu erläutern, eine doppelte Massenunwucht zu einer 1P-Komponente mit doppeltem Betrag, also doppelter Amplitude. Gleichzeitig bleibt die Phase der 1P-Komponente gleich, wenn sich nur die Amplitude der Massenunwucht verändert, die Position der Massenunwucht, also insbesondere, an welchem Rotorblatt die Massenunwucht auftritt, gleichbleibt.

Darauf aufbauend wird vorgeschlagen, jeweils eine Massenunwucht an einem ersten und einem zweiten Rotorblatt jeweils in einem Unwuchtmodell zu verwenden. Jedes Unwuchtmodell, also für jedes der beiden genannten Rotorblätter, führt dann zu einer 1P-Komponente mit Betrag und Phase, wie gesagt aber unterschiedlich darstellbar. Es wurde erkannt, dass diese beiden aus den beiden Modellen erhaltenen 1P-Komponenten linear überlagert werden können. Insbesondere können diese 1P-Komponenten, die nach Betrag und Phase vorliegen, vektoriell addiert werden. Sind beide 1P-Komponenten jeweils als komplexe Zahl mit Real- und Imaginärteil dargestellt, so kann die Addition dadurch erfolgen, dass beide Realteile addiert und beide Imaginärteile addiert werden.

Durch die vorzugsweise Verwendung gleichgroßer Massenunwuchten in den beiden Unwuchtmodellen kann eine Art Normmassenunwucht verwendet werden. Es wird also eine Massenunwucht verwendet, die eine gut handhabbare Größe hat, also groß genug ist, dass etwaige Rauscheffekte nur schwachen Einfluss haben, aber auch klein genug sind, damit die Annahme der Linearität zutrifft.

Ebenso wird vorgeschlagen, dass ein drittes Unwuchtmodell eine erste Blattwinkelunwucht an dem ersten oder anderen Rotorblatt aufweist und ein viertes Unwuchtmodell eine zweite Blattwinkelunwucht an dem zweiten oder anderen Rotorblatt aufweist, solange es nicht dem Rotorblatt entspricht, an dem das dritte Unwuchtmodell die Blattwinkelunwucht aufweist. Auch hier wird vorgeschlagen, die erste und zweite Blattwinkelunwucht vorzugsweise gleich groß zu wählen. Die Blattwinkelunwucht kann vereinfachend auch als aerodynamische Unwucht bezeichnet werden bzw. die weiter oben erwähnte aerodynamische Unwucht kann der zweiten Blattwinkelunwucht entsprechen. Tatsächlich ist dies aber nur eine vereinfachte Annahme. Aerodynamische Unwuchten können auch aus anderen Effekten resultieren bzw. andere Effekte können zusätzlich zur Blattwinkelunwucht eine aerodynamische Unwucht beeinflussen, wie unten noch beschrieben wird.

Im einfachsten Fall wird in dem Unwuchtmodell die erste Blattwinkelunwucht an dem ersten Rotorblatt und die zweite Blattwinkelunwucht an dem zweiten Rotorblatt vorgesehen, also an denselben Rotorblättern an denen die Massenunwuchten vorgesehen sind. Es hat sich aber herausgestellt, dass es zumindest bei dieser Modellbildung im Wesentlichen eine Unabhängigkeit zwischen den Massenunwuchten und Blattwinkelunwuchten gibt. Ob diese also an denselben beiden Rotorblättern modelliert werden oder nur an einem gemeinsamen Rotorblatt modelliert werden, führt zu kaum relevanten Unterschieden. Auch bei den Blattwinkelunwuchten wurde die Linearität erkannt, sodass auch hier Überlagerungen stattfinden können und die Verwendung jeweils einer geeigneten Größe der Blattwinkelunwucht ausreichend sein kann, weil diese und auch die Ergebnisse, also die 1P-Komponenten, skaliert werden können.

Durch die Möglichkeit der linearen Überlagerung zweier Massenunwuchten an zwei Rotorblättern, Gleiches gilt für die Möglichkeit der linearen Überlagerung zweier Blattwinkelunwuchten an zwei Rotorblättern, kann durch entsprechende Skalierung auch eine Massenunwucht an dem dritten Rotorblatt simuliert werden. Im Grunde können mittels linearer Überlagerung zweier Unwuchten an zwei Rotorblättern durch entsprechende Skalierung Unwuchten über den gesamten Rotor verteilt berücksichtigt werden. Das gilt sowohl für die Massenunwuchten als auch für die Blattwinkelunwuchten.

Es wird somit auch vorgeschlagen, von den vier Unwuchtmodellen deren Unwuchtkonstellation in ihrer Amplitude zu variieren und zu überlagern, um dadurch möglichst viele unterschiedliche Prüfunwuchtkonstellationen durchprüfen zu können, theoretisch nämlich unendlich viele. Im Grunde kann also durch Variieren bzw. Skalieren der ersten und zweiten Massenunwucht an zwei Rotorblättern theoretisch eine gemeinsame Massenunwucht an jeder beliebigen Stelle in einer durch drei Rotorblätter aufgespannten Rotorfläche simulatorisch angenommen werden. Gleiches gilt für die Blattwinkelunwuchten.

Für die Simulation reicht es aber aus, jeweils zwei Unwuchten an zwei Rotorblättern mit gleicher Amplitude zu modellieren und dann eine Variation durch Skalierung vorzunehmen, die keine weiteren Simulationen basierend auf den Unwuchtmodellen benötigt. Das ist sowohl für die Massenunwucht als auch für die Blattwinkelunwucht möglich. Schließlich kann das Ergebnis aller vier Unwuchten bzw. Unwuchtmodelle überlagert werden, um dadurch möglichst viele unterschiedliche Prüfunwuchtkonstellationen durchprüfen zu können. Im Grunde kann das Durchprüfen dieser vielen unterschiedlichen Prüfunwuchtkonstellationen durch entsprechende Skalierung erfolgen.

Durch diese vier Unwuchtmodelle können also Zusammenhänge hergestellt werden, jeweils zwischen einer Unwucht und einer 1P-Komponente. Durch Skalierung der Unwucht kann die jeweilige 1P-Komponente in ihrer Amplitude verändert werden. Durch unterschiedliche Skalierung zweier Massenunwuchten bzw. zweier Blattwinkelunwuchten kann zudem die Unwuchtposition und damit auch die Phase der überlagerten 1P-Komponente dieser beiden Unwuchten verändert werden.

Durch die Skalierung der Unwuchten kann also die gemeinsame 1P-Komponente jeweils zweier Unwuchten in Betrag und Phase verändert werden und dadurch an die jeweils erfasste 1P-Komponente nach Betrag und Phase angepasst werden. Ist diese überlagerte Komponente dann an die erfasste 1P-Komponente angepasst, kann aus der Skalierung die Position und die Größe der Unwucht abgelesen werden und das ist die gesuchte Unwucht, also die zu identifizierende Unwucht. Das kann für die Massenunwuchten einerseits und die Blattwinkelunwuchten andererseits durchgeführt werden. Es kommt auch eine gemeinsame Berücksichtigung und Auswertung in Betracht.

Gemäß einem Aspekt wird vorgeschlagen, dass für mehrere Windgeschwindigkeiten jeweils 1P-Komponenten bestimmt werden, sodass die 1P-Komponenten wenigstens einen von der Windgeschwindigkeit abhängigen 1P-Komponentenverlauf bilden und das wenigstens eine Unwuchtmodell zu seiner Unwuchtkonstellation mehrere 1P-Komponenten umfasst, die wenigstens einen, von der Windgeschwindigkeit abhängigen 1P-Komponenten-verlauf bilden.

Somit wird die Windgeschwindigkeit in die Bestimmung der Unwucht mit einbezogen. Es wurde erkannt, dass die Windgeschwindigkeit den Zusammenhang zwischen Unwucht und zugehöriger 1P-Komponente beeinflussen kann. Es kann durch die Berücksichtigung unterschiedlicher Windgeschwindigkeiten auch eine Genauigkeit beim Identifizieren der Unwuchten erhöht werden. Dabei wurde erkannt, dass die Windgeschwindigkeit auch eine Unsicherheit einbringen kann, die sich durch die Verwendung und die Betrachtung zu mehreren Windgeschwindigkeiten reduzieren kann.

Hier wird insbesondere vorgeschlagen, dass zum Identifizieren der Unwuchtkonstellation wenigstens zwei Unwuchtmodelle überlagert werden, sodass ihre Unwuchtkonstellationen zu der genannten Prüfunwuchtkonstellation überlagert werden, ihre 1P-Komponenten zu 1P-Prüfkomponenten überlagert werden, die 1P-Prüfkomponenten wenigstens einen von der Windgeschwindigkeit abhängigen 1P-Prüfkomponentenverlauf bilden und die Unwuchtkonstellationen der überlagerten Unwuchtmodelle so in ihrer Amplitude variiert werden, dass der wenigstens eine 1P-Prüfkomponentenverlauf möglichst gut mit dem wenigstens einen 1P-Komponentenverlauf übereinstimmt, der aus den erfassten Schwingungssignalen bestimmt wurde.

Somit wird auch hier wieder vorgeschlagen, die Unwuchtkonstellationen zu variieren, bis die 1P-Prüfkomponenten, die sich aus dem Modell ergeben, möglichst gut mit den erfassten 1P-Komponenten übereinstimmen. Hier kommt aber hinzu, dass dies für mehrere Windgeschwindigkeiten wiederholt wird. Für die unterschiedlichen Windgeschwindigkeiten wird erwartet, dass sich unterschiedliche 1P-Komponenten ergeben, besonders unterschiedliche erfasste 1P-Komponenten, also unterschiedliche 1P-Komponenten, die aus den erfassten Schwingungssignalen bestimmt wurden. Diese unterschiedlichen 1P-Komponenten bilden dann einen 1P-Komponentenverlauf, nämlich insbesondere abhängig von der Windgeschwindigkeit. Dieser 1P-Komponentenverlauf kann besonders ein solcher sein, der einen Verlauf in der komplexen Zahlenebene darstellt, wenn jede 1P-Komponente als komplexe Zahl dargestellt wird.

Zu jeder Windgeschwindigkeit werden dann also die Unwuchtmodelle so angepasst, dass die aus diesen Unwuchtmodellen resultierenden 1P-Komponenten möglichst gut mit den erfassten 1P-Komponenten übereinstimmen. Im Idealfall ergibt sich dann für jede Windgeschwindigkeit die gleiche Unwuchtkonstellation. Ergeben sich aber unterschiedliche Unwuchtkonstellationen, so kann die zu identifizierende Unwuchtkonstellation beispielsweise als Mittelwert der unterschiedlichen Unwuchtkonstellationen, die jeweils bestimmt wurden, gebildet werden. Gemäß einem Aspekt können Unwuchtkonstellationen zu Windgeschwindigkeiten, die eher einen verfälschten Wert erwarten lassen, herausgenommen werden oder mit einer geringeren Gewichtung eingehen.

Gemäß einem Aspekt wird vorgeschlagen, dass die 1P-Komponenten nach Betrag und Phase als Zahl in der komplexen Zahlenebene in Polarkoordinaten interpretiert und in die algebraische Form mit Real- und Imaginärteil transformiert werden, 1P-Komponenten des wenigstens einen Unwuchtmodells ebenfalls in die algebraische Form mit Real- und Imaginärteil transformiert werden und das Bestimmen der Unwuchtkonstellationen in Abhängigkeit von dem wenigstens einen Unwuchtmodell durch Vergleich der 1P-Komponenten in der komplexen Zahlenebene in der algebraischen Form erfolgt, wobei insbesondere von der Windgeschwindigkeit abhängige 1P-Komponentenverläufe verglichen werden.

Somit wird hier die oben bereits erläuterte Herangehensweise vorgeschlagen. Für unterschiedliche Windgeschwindigkeiten kann somit ein Verlauf in der komplexen Zahlenebene dargestellt werden, nämlich für die erfassten 1P-Komponenten. Dazu kann in den Unwuchtmodellen, insbesondere durch Skalieren, eine Anpassung so vorgenommen werden, dass die aus den Unwuchtmodellen resultierenden 1P-Komponenten, die auch als Referenzkomponenten oder Prüfkomponenten bezeichnet werden können, einen möglichst ähnlichen Verlauf haben.

Durch die Darstellung und den Vergleich in der komplexen Zahlenebene kann die Ähnlichkeit einer 1P-Komponente des Unwuchtmodells zu einer erfassten 1P-Komponente über einen Abstand in dieser komplexen Zahlenebene bewertet werden. Dadurch werden Betrag und Phase dieser 1P-Komponenten ohne Probleme einbezogen. Es brauchen keine unterschiedlichen Betrachtungen beim Vergleich der Phasen einerseits und der Beträge andererseits angestellt zu werden.

Gemäß einem Aspekt wird vorgeschlagen, dass das Erfassen der Schwingungssignale und das Bestimmen der 1P-Komponenten wenigstens über mehrere Tage, insbesondere über mehrere Wochen und weiter insbesondere über mehrere Monate wiederholt wird und/oder wenigstens über einen Zeitraum wiederholt wird, in dem die Windgeschwindigkeit wenigstens um 30 % bezogen auf eine Nennwindgeschwindigkeit variiert.

Hier wird das Wiederholen der Erfassung der Schwingungssignale und das Bestimmen der 1P-Komponente somit für unterschiedliche Windgeschwindigkeiten vorgeschlagen. Besonders soll erreicht werden, dass unwuchterregte Schwingungen derart ausgeglichen werden können, dass sie wenigstens etwa im Durchschnitt richtig ausgeglichen werden. So wird vermieden, dass lediglich die aus einer einzelnen Windgeschwindigkeit resultierenden Schwingungen kompensiert werden.

Hier wurde erkannt, dass eine Variation der Windgeschwindigkeiten bei der Wiederholung der Erfassung der Schwingungssignale über mehrere Tage oftmals gegeben ist. Bei einer Wiederholung über mehrere Wochen oder sogar mehrere Monate kann eine solche Variation erst recht angenommen werden. Außerdem oder alternativ kann bei der Wiederholung überprüft werden, ob schon eine signifikante Variation der Windgeschwindigkeiten zugrunde gelegen hat. Diese kann angenommen werden, wenn die Windgeschwindigkeit wenigstens um 30 % bezogen auf Nennwindgeschwindigkeit variiert hat, also beispielsweise wenigstens von 40 % bis 70 % Nennwindgeschwindigkeit variiert hat. Bei noch stärkeren Variationen können entsprechend bessere Ergebnisse erzielt werden.

Gemäß einem Aspekt wird vorgeschlagen, dass als Schwingungssignale jeweils eine Turmschwingung im Bereich des Turmkopfes erfasst wird. Insbesondere wird jeweils ein Beschleunigungssignal des Turmkopfes erfasst. Insbesondere sollte dabei sowohl eine Turmkopflängsschwingung als auch eine Turmkopfquerschwingung erfasst werden.

Es wurde erkannt, dass, obwohl Rotorunwuchten zu erfassen sind, die Schwingungen des Turmes dazu repräsentativ sind. Außerdem wurde erkannt, dass Rotorunwuchten besonders auch Turmschwingungen anregen und damit Turmbelastungen bewirken können. Es wurde besonders erkannt, dass Rotorunwuchten, insbesondere die 1P-Komponenten, oftmals im Bereich einer Resonanzfrequenz des Turmes liegen. Insoweit wird durch die Erfassung der Turmschwingungen im Ergebnis auch ein besonders relevantes Schwingungssignal erfasst.

Gemäß einem Aspekt wird vorgeschlagen, dass beim wiederholten Erfassen der Schwingungssignale zum Bestimmen der 1P-Komponenten ein dabei jeweils vorliegender Betriebspunkt der Windenergieanlage, insbesondere gekennzeichnet durch eine erfasste aktuelle Rotordrehzahl und/oder eine erfasste aktuell erzeugte Leistung, bestimmt und im Unwuchtmodell zur Bestimmung von 1P-Modellkomponenten berücksichtigt wird.

Der Betriebspunkt einer Windenergieanlage, der auch als Arbeitspunkt bezeichnet werden kann, wird besonders durch eine Rotordrehzahl und/oder eine erzeugte Leistung gekennzeichnet. Da ein fest vorgegebener Zusammenhang zwischen der Rotordrehzahl und der erzeugten Leistung besteht, ist es ausreichend, eine der beiden Größen aufzunehmen, um dadurch den Betriebspunkt der Windenergieanlage zu bestimmen. Die erzeugte Leistung, die vereinfachend auch nur als Leistung bezeichnet werden kann, kann auch durch ein Generatormoment gekennzeichnet werden. Der Arbeitspunkt kann alternativ oder zusätzlich durch einen gemeinsamen Blattwinkel und/oder eine erfasste Windgeschwindigkeit gekennzeichnet sein. Hierdurch kann besonders ein Arbeitspunkt im Volllastbetrieb gekennzeichnet werden. Der gemeinsame Blattwinkel beschreibt den für alle Rotorblätter gleich vorgegebenen Blattwinkel, der auch als kollektiver Blattwinkel bezeichnet werden kann. Die einzelnen Blattwinkel können sich durch Offsets unterscheiden.

Hier liegt die Erkenntnis zugrunde, dass die 1P-Komponenten, die sich aus der Unwuchtkonstellation ergeben, auch von dem Betriebspunkt der Windenergieanlage abhängen können. Insoweit wird vorgeschlagen, dies im Unwuchtmodell zu berücksichtigen und dafür den Betriebspunkt der Windenergieanlage zu bestimmen, insbesondere die Rotordrehzahl und/oder erzeugte Leistung repräsentativ dafür zu erfassen.

Da sich der Betriebspunkt der Windenergieanlage ständig ändern kann, besonders bedingt durch die ständige Änderung der Windgeschwindigkeit, wird vorgeschlagen, beim wiederholten Erfassen der Schwingungssignale den vorliegenden Betriebspunkt der Windenergieanlage somit jedes Mal zu bestimmen und zu berücksichtigen. Die erfassten, den Betriebspunkt kennzeichnenden Daten werden den aus den Schwingungssignalen bestimmten 1P-Komponenten zugeordnet. Der Betriebspunkt der Windenergieanlage wird dann im Unwuchtmodell berücksichtigt und damit die reale Situation besser berücksichtigt, sodass die Bestimmung der 1P-Modellkomponenten verbessert ist gegenüber einer Situation, bei der der jeweilige Betriebspunkt nicht berücksichtigt wird.

Zusätzlich oder alternativ wird vorgeschlagen, eine Resonanzfrequenz der Windenergieanlage, insbesondere des Turmes, oder eine dafür repräsentative Größe, aufzunehmen und im Unwuchtmodell zur Bestimmung der 1P-Modellkomponenten zu berücksichtigen. Die Resonanzfrequenz der Windenergieanlage ist eine Systemeigenschaft der Windenergieanlage und sollte sich nicht so schnell ändern und auch nicht von dem Betriebspunkt der Windenergieanlage abhängen. Vom Betriebspunkt hängt allenfalls ab, ob eine Schwingung im Bereich der Resonanzfrequenz angeregt wird.

Insoweit kann eine einmalige Erfassung der Resonanzfrequenz in Betracht kommen, die dann immer im Unwuchtmodell zur Bestimmung der 1P-Modellkomponenten berücksichtigt wird. Hier wurde besonders erkannt, dass die jeweilige Windenergieanlage zwar dem Grunde nach bekannt ist, aber gerade eine Resonanzfrequenz der Windenergieanlage, insbesondere des Turmes, in Abhängigkeit von den Aufstellbedingungen variieren kann. Besonders die Resonanzfrequenz des Turmes kann von seiner Gründung, also dem gewählten Fundament, abhängen. Das wird somit in dem Unwuchtmodell berücksichtigt. Das Unwuchtmodell braucht dazu keine detaillierte Kenntnis der hier beispielhaft angeführten Art der Gründung zu berücksichtigen, sondern kann den resultierenden Einfluss einfach durch die Berücksichtigung der Resonanzfrequenz berücksichtigen.

Eine repräsentative Größe für die Resonanzfrequenz kann auch ein entsprechender Eigenwert der Windenergieanlage, insbesondere des Turmes, sein. Hier wurde besonders erkannt, dass der Eigenwert bzw. die Eigenfrequenz, zumindest eine dieser genannten Größen, der Resonanzfrequenz sehr ähnlich ist. Dabei kann in einem entsprechenden Unwuchtmodell oftmals ein Eigenwert in einer Übertragungsfunktion einfacher berücksichtigt werden.

Erfindungsgemäß wird auch ein Verfahren zum Kompensieren wenigstens einer Rotorunwucht einer Windenergieanlage vorgeschlagen, wobei
die Windenergieanlage einen Turm mit einem Turmkopf und der Rotor eine Rotorachse und mehrere, in ihrem Blattwinkel verstellbare Rotorblätter aufweist. Das vorgeschlagene Verfahren umfasst das Identifizieren einer Unwuchtkonstellation in Abhängigkeit von wenigstens einem Unwuchtmodell, in Abhängigkeit von wenigstens einer 1P-Längsschwingungskomponente, die jeweils aus einem erfassten Längsschwingungssignal bestimmt wurde, und in Abhängigkeit von wenigstens einer 1P-Querschwingungskomponente, die jeweils aus einem erfassten Querschwingungssignal bestimmt wurde, und das Verfahren umfasst das Verändern des Rotors, nämlich hinsichtlich seiner Unwuchtkostellation derart, dass wenigstens eine Rotorunwucht der identifizierten Unwuchtkonstellation reduziert wird.

Es wird also vorgeschlagen, eine Unwuchtkonstellation zu identifizieren, was in Abhängigkeit von wenigstens einem Unwuchtmodell erfolgt und in Abhängigkeit von wenigstens einer 1P-Längsschwingungskomponente, die jeweils aus einem erfassten Längsschwingungssignal bestimmt wurde, sowie in Abhängigkeit von wenigstens einer 1P-Querschwingungskomponente, die jeweils aus einem erfassten Querschwingungssignal bestimmt wurde. Insbesondere wird die Unwuchtkonstellation mit einem Verfahren gemäß einem der vorstehend beschriebenen Aspekte identifiziert. Es wird dann vorgeschlagen, den Rotor hinsichtlich seiner Unwuchtkonstellation derart zu verändern, dass wenigstens eine Rotorunwucht der identifizierten Unwuchtkonstellationen reduziert wird.

Wie oben erläutert, kann eine Massenunwucht und/oder eine aerodynamische Unwucht, die auch als Blattwinkelunwucht bezeichnet werden kann, vorliegen. Sowohl die Massenunwucht als auch die Blattwinkelunwucht werden hier allgemein unter den Begriff "Rotorunwucht" gefasst.

Zum Reduzieren einer Massenunwucht wird insbesondere vorgeschlagen, wenigstens eine Ausgleichsmasse an einem Rotorblatt anzuordnen oder zu entfernen und/oder in Position und/oder Größe zu verändern. Es können auch mehrere Ausgleichsmassen angeordnet oder entfernt werden, nämlich so, dass sie möglichst die erfasste Massenunwucht kompensieren. Das Verändern in Position und/oder Größe kann bedeuten, dass eine Ausgleichsmasse an dem Rotorblatt entfernt und an anderer Stelle an dem Rotorblatt durch eine andere Ausgleichsmasse ersetzt wird. Es kann aber auch bedeuten, eine Ausgleichsmasse, die bereits vorhanden ist, an oder in dem Rotorblatt zu verschieben. Dazu kann in dem Rotorblatt auch eine Flüssigkeit von einem Behälter in einen anderen in entsprechender Menge umgepumpt werden.

Zum Reduzieren einer Blattwinkelunwucht wird vorgeschlagen, einen Blattwinkel wenigstens eines der Rotorblätter zu verändern. Dabei geht es um ein im Wesentlichen einmaliges Verstellen des Blattwinkels des wenigstens einen Rotorblatts, insbesondere kann hier ein Blattwinkeloffset vorgesehen sein, sodass im Betrieb der Windenergieanlage, wenn die Rotorblätter zur Steuerung der Windenergieanlage regelmäßig in ihrem Blattwinkel verändert werden, also gepitcht werden, dieser Blattwinkeloffset beibehalten wird.

Gemäß einem Aspekt wird vorgeschlagen, dass nach dem Verändern des Rotors hinsichtlich seiner Unwuchtkonstellation zur Reduzierung der Rotorunwucht die Identifikation der Unwuchtkonstellation wiederholt wird und/oder das Verändern des Rotors zur Reduzierung der Rotorunwucht nach einer erneuten Identifikation der Unwuchtkonstellation wiederholt wird. Insoweit wird hier eine Iteration vorgeschlagen, bei der besonders nach der Identifikation der Unwuchtkonstellation diese so gut wie möglich kompensiert wird. Eine weitere Identifikation kann dann erkennen, inwieweit die Kompensation der Rotorunwucht noch nicht vollständig erfolgreich war, indem erneut die Unwuchtkonstellation identifiziert wird, quasi eine verbliebene Rotorunwucht. Zu der verbliebenen Rotorunwucht kann dann erneut eine Kompensation durchgeführt werden, meist wird diese dabei in einem deutlich geringeren Umfang notwendig sein.

Vorzugsweise kann dieses Verändern des Rotors und das Identifizieren der Unwuchtkonstellation mehrfach wiederholt werden, insbesondere wenigstens zweifach, dreifach oder fünffach. Dadurch kann eine Iteration vorgesehen sein, um die wenigstens eine Rotorunwucht möglichst zu minimieren.

Gemäß einem Aspekt wird vorgeschlagen, dass die Identifikation der Unwuchtkonstellation automatisch initiiert wird, insbesondere nach vorbestimmten Startkriterien und/oder dass die Identifikation der Unwuchtkonstellation über eine Fernwartung initiiert wird. Dadurch können Unwuchtkonstellationen identifiziert werden, also Rotorunwuchten erkannt werden, ohne dass dazu Servicepersonal zur entsprechenden Windenergieanlage fahren muss. Ein vorbestimmtes Startkriterium kann im einfachsten Fall eine Zeitvorgabe sein, wie beispielsweise, alle drei Monate eine Unwuchtkonstellation zu identifizieren. Ein anderes Startkriterium kann auch das Erkennen von Schwingungen, insbesondere Turmschwingungen, mit einer Amplitude oberhalb eines vorgegebenen Schwellwertes sein.

Auch über eine Fernwartung kann die Identifikation der Unwuchtkonstellation initiiert werden. Besonders kann die Fernwartung über ein SCADA-System implementiert sein. Hierdurch kann das Servicepersonal diese Identifikation initiieren, ohne zur entsprechenden Windenergieanlage fahren zu müssen. Auch das Servicepersonal kann dazu über dieselbe Fernwartung Schwingungsamplituden prüfen, um dann zu entscheiden, ob eine Identifikation gestartet wird.

Außerdem oder alternativ kann das Verändern des Rotors zum Reduzieren wenigstens einer Rotorunwucht automatisch, über eine Fernwartung und/oder über eine Fernbedienung initiiert werden.

Bei dem automatischen Initiieren der Identifikation der Unwuchtkonstellation ist besonders vorgesehen, dass bei Erkennen wenigstens einer Rotorunwucht über einem Unwuchtschwellwert das Verändern des Rotors zum Reduzieren der Rotorunwucht initiiert wird. Ebenfalls kann das Verändern auch über eine Fernwartung und/oder Fernbedienung initiiert werden. Auch hier kann Servicepersonal in Abhängigkeit von einer zu großen Unwucht dieses Verändern des Rotors zum Reduzieren der Unwucht einleiten oder durchführen.

Hier wurde besonders erkannt, dass das Reduzieren einer Blattwinkelunwucht einfach durch das Vorsehen eines Offsetwerts für wenigstens einen Blattwinkel realisiert werden kann, also durch Vorsehen eines Blattwinkeloffsets. Dazu ist kein Servicepersonal vor Ort erforderlich und es kann automatisch oder von einer Fernwartung durchgeführt werden.

Eine automatische Ausführung, also automatisches Verändern des Rotors und/oder automatisches Initiieren des Veränderns des Rotors, kommt besonders dann in Betracht, wenn eine identifizierte Rotorunwucht einen Schwellwert überschreitet. Das kann auch das Kriterium für einen Servicemitarbeiter in einer Leitwarte für eine Fernwartung sein. Sollte dennoch vorgesehen sein, dass Servicepersonal zur Windenergieanlage fährt, so könnte aber eine Veränderung über eine Fernbedienung initiiert werden. All diese Möglichkeiten haben den Vorteil, dass die Windenergieanlage nicht angehalten werden muss, was sonst häufig aus Sicherheitsgründen erforderlich wäre.

Für das Anbringen oder Entfernen von Ausgleichsmassen an den Rotorblättern kann häufig der Besuch von Servicepersonal an der Windenergieanlage notwendig sein. Es wurde aber erkannt, dass auch hier Möglichkeiten bestehen, Massenunwuchten aus der Ferne zu verändern. Hierzu können besonders in radialer Richtung verschiebbare Massen an den Rotorblättern vorgesehen sein. Darunter fällt auch, innerhalb der Rotorblätter, Flüssigkeiten von einem Behälter in radialer Richtung in einen anderen Behälter umzupumpen.

Erfindungsgemäß wird auch eine Windenergieanlage vorgeschlagen, die dazu vorbereitet ist, eine Rotorunwuchtkonstellation zu identifizieren und optional zum Kompensieren wenigstens einer Rotorunwucht vorbereitet ist. Dabei ist die Windenergieanlage dazu vorbereitet, ein Verfahren gemäß wenigstens einem vorstehend erläuterten Aspekt auszuführen.

Die Windenergieanlage kann dadurch dazu vorbereitet sein, wenigstens ein solches Verfahren auszuführen, dass ein entsprechendes Verfahren auf einem Steuerungscomputer implementiert ist, der zur Windenergieanlage gehört.

Zum Verändern des Rotors können entsprechende Aktuatoren vorgesehen sein, um den Rotor nämlich so zu verändern, dass wenigstens eine Unwucht, also Rotorunwucht, verändert, insbesondere reduziert wird. Zum Verändern einer Blattwinkelunwucht kann besonders eine Pitchverstellung der Rotorblätter vorgesehen sein, insbesondere eine je Rotorblatt, die in der Lage ist, einen entsprechenden Blattwinkeloffset zu empfangen und dauerhaft zu speichern. Ein solcher Blattwinkeloffset kann aber auch in einer zentralen Steuerung, die diese Pitcheinrichtungen ansteuert, vorgesehen sein.

Zum Verändern einer Ausgleichsmasse kann in jedem Rotorblatt ein Aktuator vorgesehen sein, der eine Ausgleichsmasse verschiebt. Beispielsweise kann eine Konstellation vorhanden sein, die zwei in radialer Richtung beabstandete und im Wesentlichen vollständig geschlossene Flüssigkeitsbehälter aufweist, zwischen denen mittels einer Pumpe, die ebenfalls Teil dieser Einrichtung sein kann, Flüssigkeiten bewegt werden können, um dadurch eine Masse in radialer Richtung zu verschieben. Unter radialer Richtung ist zumindest in diesem Zusammenhang eine bezogen auf den Rotor zu verstehen.

Die Erfindung wird nun nachfolgend anhand von Ausführungsformen beispielhaft unter Bezugnahme auf die begleitenden Figuren näher erläutert.
- **Figur 1**: zeigt eine Windenergieanlage in einer perspektivischen Darstellung.
- **Figur 2**: zeigt eine Interaktionsstruktur für Unwuchtfaktoren, Unwuchterfassung und Unwuchtkompensation.
- **Figur 3**: zeigt ein Diagramm zur Veranschaulichung der Darstellung und Verwendung von 1P-Komponenten.
- **Figur 4**: zeigt Zeitdiagramme zu erfassten Signalen, aus denen 1P-Komponenten, wie in Figur 3 gezeigt, bestimmt werden.
- **Figur 5**: zeigt ein Diagramm zur Überlagerung von 1P-Komponenten in der komplexen Ebene, die auch Figur 3 zugrunde liegt.
- **Figur 6**: zeigt ein Diagramm von 1P-Verläufen dreier Rotorblätter in Abhängigkeit von der Windgeschwindigkeit.
- **Figur 7**: zeigt ein Diagramm zur Überlagerung zweier 1P-Komponentenverläufe zur Schwingungsvorhersage.
- **Figur 8**: zeigt einen schematischen Ablauf zum Identifizieren einer Rotorkonstellation mit Hilfe eines Unwuchtmodells.

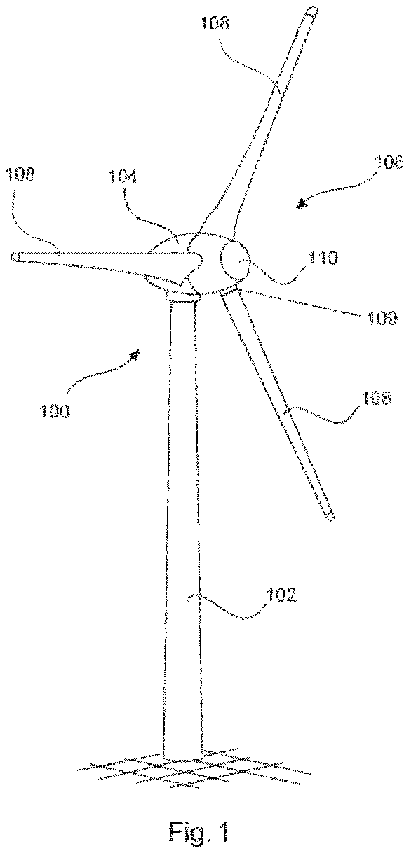

**Figur 1** zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb der Windenergieanlage 100 durch den Wind in eine Drehbewegung versetzt und treibt dadurch einen Generator in der Gondel 104 an.

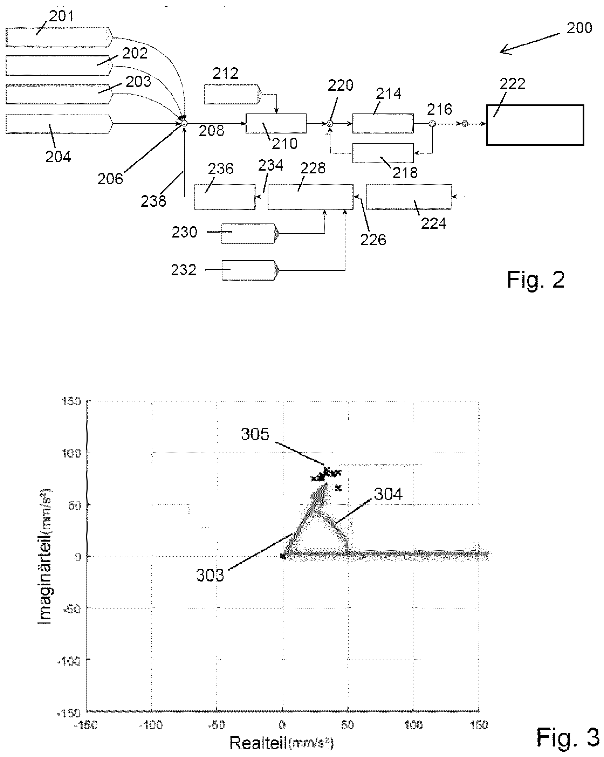

**Figur 2** zeigt eine Interaktionsstruktur 200. Diese kann veranschaulichend so verstanden werden, dass diverse Einflüsse an einem Referenzpunkt 206 auf einen Rotor einwirken. Insoweit könnte der Referenzpunkt 206 auch als Rotor verstanden werden. Als Gründe für Unwuchten sind einige exemplarisch dargestellt. So kann als erster Unwuchtgrund 201 eine Blattreparatur zu einer Unwucht, insbesondere Massenunwucht, führen oder eine Unwucht auch verringern. Der Grund kann hier besonders in einer zusätzlichen Masse am Rotorblatt liegen.

Als zweiter Unwuchtgrund 202 kommt ein ungenau eingestellter Blattwinkel in Betracht, der besonders als Blattwinkeloffset auftritt und eine aerodynamische Unwucht bzw. Blattwinkelunwucht bildet.

Als dritter Unwuchtgrund 203 kommen ungenaue Blattgewichtsdaten in Betracht. Hier spielt besonders hinein, dass es nicht möglich ist, drei Rotorblätter absolut identisch herzustellen, wodurch auch unterschiedliche Massen resultieren können. Die Abweichungen sind zwar gering, können aber für eine Unwucht, nämlich besonders eine Massenunwucht, ausreichend groß sein.

Als vierter Unwuchtgrund kommt eine inhomogene Nabensteifigkeit in Betracht.

All diese Einflussfaktoren bzw. Unwuchtgründe wirken auf den Referenzpunkt 206 bzw. insoweit auf den Rotor, und das resultiert in einer Rotorunwucht 208. Die Rotorunwucht 208 führt zu einer Schwingungsanregung 210, die auch von einem Betriebszustand 212 der Windenergieanlage abhängt.

Das Ergebnis ist somit eine Schwingung, die auf den Turm einwirken kann, von dem besonders sein Eigenmode relevant ist. Entsprechend wird dies in Figur 2 durch den Eigenmodeblock 214 dargestellt. Das Resultat sind dann die Turmschwingungen 216, die aber regelungstechnisch über einen Steuerungsblock 218 zurückgeführt werden und damit zumindest teilweise an der Summierstelle 220 kompensierend wirken können.

Die Turmschwingungen 216 können in einen Betriebsführungsblock 222 gegeben werden. Ein solcher Betriebsführungsblock beinhaltet auch Sicherheitsfunktionen, die in der Windenergieanlage bei zu hohen Schwingamplituden Notmaßnahmen auslösen. Eine Analyse kann natürlich auch dazu führen, dass die Turmschwingungen in einem normalen unkritischen Bereich sind. Andererseits, auch wenn keine Notmaßnahmen ausgelöst werden, kommt in Betracht, dass die Turmschwingungen die Lebenszeit der Windenergieanlage, insbesondere des Turms, beeinflussen, was der Betriebsführungsblock ebenfalls erkennen kann.

Es wird nun besonders auch erfindungsgemäß vorgeschlagen, die Turmschwingungen 216 in einem Analyseblock 224 auszuwerten und insbesondere jeweils aktuelle 1P-Komponenten aus einem Längsschwingungssignal und einem Querschwingungssignal zu erfassen. Es ergeben sich somit wenigstens eine 1P-Längsschwingungskomponente und eine 1P-Querschwingungskomponente, die aus der Turmschwingung 216 bestimmt werden.

Die Turmschwingung 216 kann dabei ein Längsschwingungssignal und auch ein Querschwingungssignal umfassen bzw. von der Turmschwingung 216 können diese beiden Schwingungssignale, also Längsschwingungssignal und Querschwingungssignal, aufgenommen werden. Das Erfassen dieser Schwingungssignale und Auswertung in dem Analyseblock 224 kann regelmäßig wiederholt werden. Beispielsweise kann über jeweils eine volle Umdrehung oder mehrere volle Umdrehungen des Rotors der Windenergieanlage jeweils eine 1P-Komponente für die Längsschwingung und eine 1P-Komponente für die Querschwingung bestimmt werden.

Der Analyseblock 224 gibt also 1P-Komponenten 226 aus, die an den Identifikationsblock 228 gegeben werden. In dem Identifikationsblock 228 werden also Rotorunwuchten identifiziert und damit insgesamt eine Unwuchtkonstellation bzw. eine Rotorunwuchtkonstellation identifiziert.

In diese Identifikation geht besonders eine Laststeuerung 230 ein, die Lasten erfasst bzw. aus der Lastensteuerung Lasten kennt und daraus eine absolute Rotorposition ableiten kann. Insbesondere ein Nullpunkt als Referenzpunkt kann hier für den Rotor abgeleitet werden.

Weiterhin geht eine Lastsimulation 232 ein, die insbesondere Einheitsunwuchten simuliert. Das Ergebnis dieser Simulation von Einheitsunwuchten können 1P-Komponenten sein, die jeweils einer simulierten Einheitsunwucht zugeordnet werden. Über eine Skalierung können diese 1P-Komponenten dann so gut wie möglich den 1P-Komponenten 226 angepasst werden, die der Analyseblock 224 aus den erfassten Schwingungssignalen der Turmschwingung 216 bestimmt hat.

Im Ergebnis kann der Identifikationsblock 228 damit eine Unwuchtkonstellation 234 identifizieren, und diese Unwuchtkonstellation 234 wird dann an den Ausgleichsblock 236 gegeben. Der Ausgleichsblock 236 kann Ausgleichsmaßnahmen identifizieren bzw. veranlassen, insbesondere Offsetwerte für ein oder zwei Rotorblätter und Ausgleichsgewichte nach Größe und Position ebenfalls für ein oder zwei Rotorblätter. Diese Ausgleichsmaßnahmen wirken dann ebenfalls auf den Referenzpunkt 206 bzw. damit auf den Rotor und sollten möglichst den beispielhaft genannten vier Unwuchtgründen 201 bis 204 entgegenwirken.

**Figur 2** zeigt insoweit eine Interaktionsstruktur, die die Interaktion veranschaulicht. Die Interaktionsstruktur kann aber auch als Steuerungsstruktur bzw. Struktur zum Kompensieren wenigstens einer Unwucht verstanden werden. Wird nämlich eine Kompensation durchgeführt, bei der der Ausgleichsblock 236 entsprechende Ausgleichsmaßnahmen 238 vorgibt, sollte sich auch die Rotorunwucht 208 verringern, entsprechend auf das System einwirken und dann auch zu verringerten Turmschwingungen 216 führen. Entsprechend sollte auch der Analyseblock 224 geringere Schwingungen erfassen und geringere, also kleinere, 1P-Komponenten bestimmen.

Im Idealfall werden die 1P-Komponenten dann zu null. Werden sie aber nicht zu null, so können sie im Identifikationsblock 228 zu kleineren Unwuchtkonstellationen 234 führen und entsprechend in dem Ausgleichsblock 236 zu geringeren Ausgleichsmaßnahmen 238. Im Ergebnis erfolgt dadurch eine Adaption bzw. in einer Iteration eine noch bessere Kompensation. Insoweit kann der Ausgleichsblock 236 auch als Kompensationsblock und die Ausgleichsmaßnahme 238 als Kompensationsmaßnahme oder Kompensation bezeichnet werden.

Die erfasste Schwingung bzw. die erfassten Schwingungssignale werden durch 1P-Komponenten berücksichtigt, die zur Identifikation der Unwuchtkompensation genutzt werden können. Jede 1P-Komponente kann durch eine Phase und eine Amplitude dargestellt und berücksichtigt werden, wie es in **Figur 3** in der dort gezeigten komplexen Zahlenebene mit einer Amplitude 303 und einem Phasenwinkel 304 exemplarisch dargestellt ist. Entsprechend kann die 1P-Komponente auch durch den Realteil und Imaginärteil angegeben werden, wie sich aus dieser Darstellung der **Figur 3** unmittelbar ergibt. Veranschaulichend sind mehrere Datenpunkte 305 in Figur 3 dargestellt. Natürlich hat jeder Datenpunkt seinen eigenen Real- und Imaginärteil bzw. seine eigene Amplitude 303 und seinen eigenen Phasenwinkel 304. Die Werte des Real- und Imaginärteils können jeweils als Beschleunigungswerte mit der Einheit mm/s² angegeben werden.

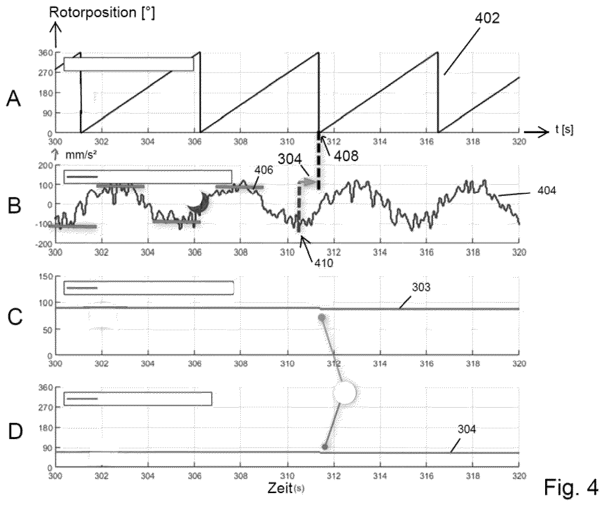

**Figur 4** zeigt Zeitdiagramme von Signalen, wobei im obersten Diagramm A die Rotorposition dargestellt ist, die über mehrere Umdrehungen aufgenommen wurde. Figur 4 zeigt dabei Zeitsignale, die über 20 s aufgenommen wurden. Der Rotor hat sich dabei etwa viermal gedreht und bei jeder Umdrehung springt der Wert wieder auf 0°. Somit zeigt das Diagramm A die Rotorposition von 0° bis 360°. Das Diagramm A zeigt somit einen Rotorpositionsverlauf 402.

Das Diagramm B zeigt ein aufgenommenes Schwingungssignal, beispielhaft als seitliche Turmschwingung, also als Querschwingung, und dabei als Beschleunigungssignal und somit mit der Einheit mm/s². Das Diagramm B zeigt somit einen Querschwingungssignalverlauf 404.

Mittelwerte 406 maximaler Amplituden des Querschwingungssignals 404, was betragsmäßig zu verstehen ist, bilden eine Amplitude 303, die als zeitlicher Verlauf in dem Diagramm C dargestellt ist und in dem Diagramm der komplexen Zahlenebene der Figur 3 veranschaulicht ist. Zur Erfassung dieser Amplitude 303 können von dem Querschwingungssignal 404 jeweils die betragsmäßig maximalen Werte betrachtet werden.

Anhand des Rotorpositionssignals 402 kann eine Nullposition 408 als Referenzposition festgelegt werden. Von dem Querschwingungssignal 404 kann eine Minimalstelle 410 bestimmt werden und der Abstand von dort zur Nullposition 408 kann als Phasenwinkel 304 verwendet werden. Dieser ist im Diagramm B eingezeichnet und im Diagramm D ist dazu ein zeitlicher Verlauf eingezeichnet. Der Phasenwinkel 304 ist auch derjenige, der in Figur 3 in der komplexen Zahlenebene veranschaulicht ist.

Somit kann zu jedem aufgenommenen Signal, wie in Figur 4 exemplarisch anhand des Querschwingungssignals 404 veranschaulicht, eine 1P-Komponente nach Betrag bzw. Amplitude 303 und Phase bzw. Phasenwinkel 304 bestimmt werden. In der komplexen Zahlenebene kann eine solche 1P-Komponente mit einer anderen durch Addition überlagert werden.

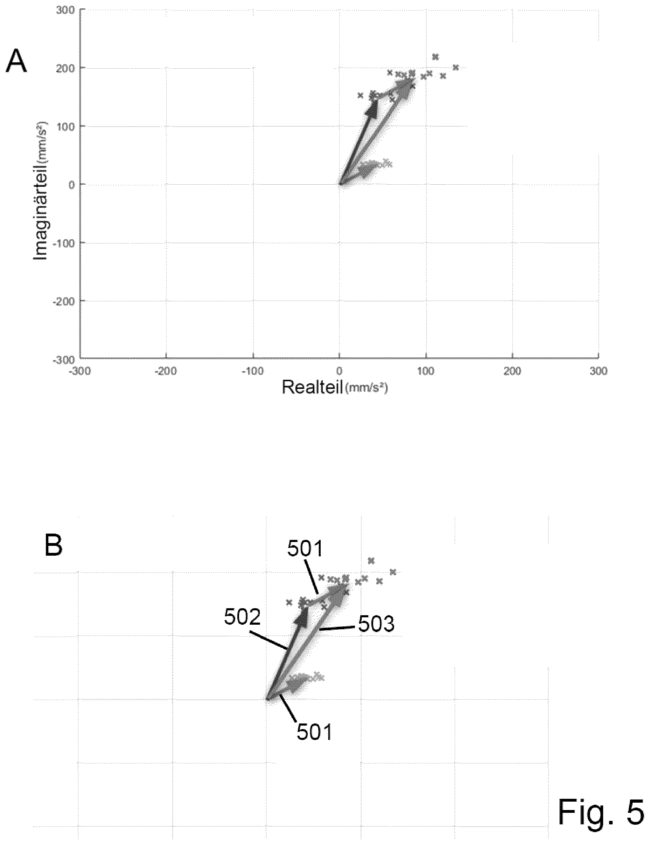

Eine solche Überlagerung ist in **Figur 5** veranschaulicht. Figur 5 zeigt somit ein Diagramm ganz ähnlich zu Figur 3, nämlich eine komplexe Zahlenebene, in der aber basierend auf mehreren Messdaten 1P-Komponenten einschließlich einer Überlagerung dargestellt sind. Die 1P-Komponenten geben somit Beschleunigungen wieder und entsprechend sind sowohl Real- als auch Imaginärteil Beschleunigungswerte, nämlich mm/s².

Diagramm B zeigt eine Vergrößerung, in der, jeweils basierend auf mehreren Messdaten, eine erste 1P-Komponente 501 zu einer Blattwinkelunwucht von 2° gehört. Eine zweite 1P-Komponente 502 gehört zu einer Massenunwucht von 6000 kg x m.

Die ersten und zweiten 1P-Komponenten 501 und 502 können zu einer dritten 1P-Komponente 503 überlagert werden, nämlich durch vektorielle Addition.

Die beiden 1P-Komponenten 501 und 502 gehören hier zur gleichen Schwingungsrichtung, z.B. der Querschwingungsrichtung. Daher können hier beide Vektoren addiert werden. Es werden in diesem Beispiel also eine massenunwucht-bedingte Querschwingung und eine blattwinkelfehlstellungs-bedingte Querschwingung addiert. Das wird hier vorgeschlagen, da beide Schwingungsursachen, also die Massen- und Pitchunwucht, beide, wenn auch je nach Arbeitspunkt in unterschiedlichem Maße, sowohl zu Quer- als auch zu Längsschwingungen führen.

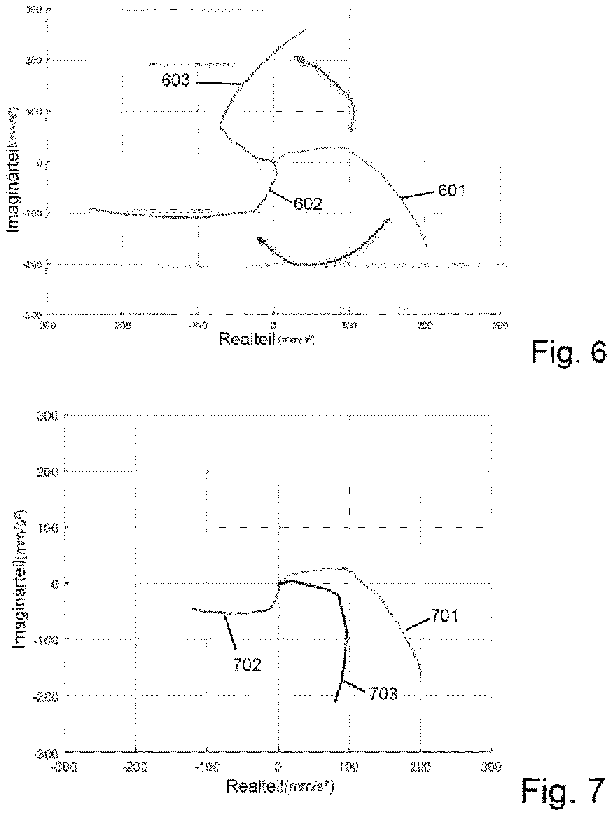

Die Figuren 3 bis 5 berücksichtigen im Wesentlichen keine variierende Windgeschwindigkeit, sind mit anderen Worten also für eine im Wesentlichen konstante Windgeschwindigkeit aufgenommen worden. Die Windgeschwindigkeit kann aber einen erheblichen Einfluss auf die 1P-Komponenten haben, und das ist in **Figur 6** dargestellt. Figur 6 zeigt ein Diagramm für 1P-Komponentenverläufe für drei Rotorblätter für unterschiedliche Windgeschwindigkeiten. Somit ist ein erster 1P-Komponentenverlauf 601 für ein erstes Rotorblatt, ein zweiter 1P-Komponentenverlauf 602 für ein zweites Rotorblatt und ein dritter 1P-Komoponentenverlauf 603 für ein drittes Rotorblatt dargestellt. Diese Rotorblätter gehören zu demselben Rotor, nämlich einem Rotor mit genau drei Rotorblättern.

Jedem der drei 1P-Komponentenverläufe 601 bis 603 liegt jeweils dieselbe Unwucht, hier nämlich eine Blattwinkelunwucht, zugrunde. An einem Mittelpunkt 604 berühren sich die drei 1P-Komponentenverläufe 601 bis 603, und dort ist die Windgeschwindigkeit gering. Von dort aus zum jeweils anderen Ende der 1P-Komponentenverläufe 601 bis 603 nimmt die Windgeschwindigkeit immer weiter zu.

Hier ist besonders zu erkennen, dass die drei 1P-Komponentenverläufe 601 bis 603 im Wesentlichen identisch sind, lediglich um 120° jeweils zueinander verschoben. Da in dem Diagramm der Realteil und der Imaginärteil nicht identisch aufgelöst sind, ergeben sich leichte Verzerrungen, wodurch die drei 1P-Komponentenverläufe 601 bis 603 etwas unterschiedlich aussehen, sie sind es aber nicht.

Jedenfalls resultiert die Erkenntnis, dass das Verschieben einer Unwucht von einem Blatt zum anderen zu einer Phasenveränderung von 120° führt, wohingegen die Amplitude jeweils gleich bleibt. Somit kann von einer 1P-Komponente einer Unwucht an einem Rotorblatt auf eine 1P-Komponente einer anderen Unwucht an einem anderen Rotorblatt geschlossen werden.

Diese Erkenntnis kann zum Identifizieren der Blattunwuchten basierend auf einem Unwuchtmodell verwendet werden, was **Figur 7** veranschaulicht. Figur 7 zeigt eine komplexe Zahlenebene mit den gleichen Werten für Real- und Imaginärteil, wie Figur 6. Beispielhaft ist ein erster 1P-Komponentenverlauf 701 und ein zweiter 1P-Komponentenverlauf 702 dargestellt. Dem ersten 1P-Komponentenverlauf 701 liegt eine Blattwinkelunwucht von 1° für ein erstes Rotorblatt zugrunde und dem zweiten 1P-Komponentenverlauf 702 liegt eine Blattwinkelunwucht von 0,5° für ein zweites Rotorblatt zugrunde. Die lineare Überlagerung führt zu dem dritten 1P-Komponentenverlauf 703.

Hier liegt nun die Annahme zugrunde, dass der dritte 1P-Komponentenverlauf 703 so, oder so ähnlich für die entsprechend unterschiedlichen Windgeschwindigkeiten aus tatsächlichen Messungen aufgenommen wurde. Zu dem dritten 1P-Komponentenverlauf 703 soll also eine zugrundeliegende Blattwinkelunwucht identifiziert werden. Dazu wird eine Simulation verwendet, die ein Unwuchtmodell mit zwei Einheitsunwuchten von beispielsweise 1° je Rotorblatt zugrunde legt. Daraus werden 1P-Komponentenverläufe abgeleitet und überlagert und mit dem dritten 1P-Komponentenverlauf 703 verglichen.

Im Beispiel würden also zwei Einheitsunwuchten von je 1° bei der Überlagerung nicht zum dritten 1P-Komponentenverlauf 703 führen. Durch eine Skalierung können aber beide simulierten 1P-Komponentenverläufe modifiziert und damit die Überlagerung modifiziert werden. Bei der Modifizierung wurde dann von dem einen Rotorblatt die Skalierung immer weiter reduziert, bis sich das Ergebnis gemäß dem zweiten 1P-Komponentenverlauf 702 ergeben hat. Das hat dann bei der Überlagerung der beiden 1P-Komponentenverläufe 701 und 702 zum dritten 1P-Komponentenverlauf geführt. Dadurch wurde für den erfassten dritten 1P-Komponentenverlauf 703 eine Blattwinkelunwucht an dem einen Rotorblatt von 1° und an dem anderen Rotorblatt von 0,5° identifiziert.

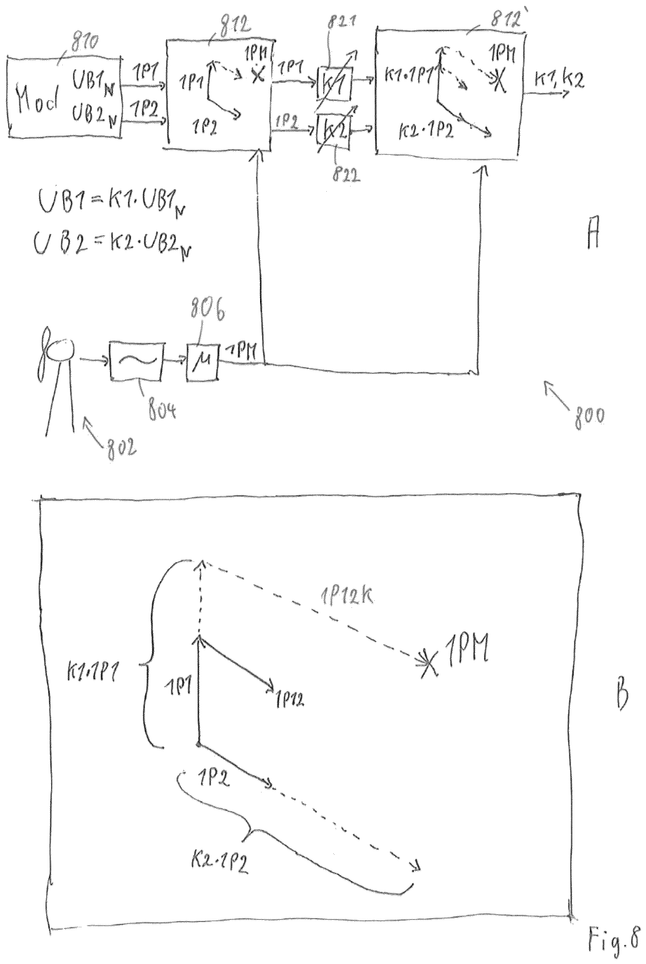

Ein mögliches Herangehen bei der Identifikation ist in **Figur 8** veranschaulicht. **Figur 8A** zeigt dabei einen Ablauf und **Figur 8B** daraus einen Ausschnitt. Figur 8A zeigt somit einen schematischen Ablauf 800, der vorsieht, Schwingungen an einer Windenergieanlage 802 zu erfassen, was der Schwingungsblock 804 veranschaulicht. Beispielsweise können Querschwingungen des Turms erfasst werden, was hier als Beispiel zugrunde gelegt sei. Derselbe Ablauf ist ebenso für Längsschwingungen des Turms anzuwenden. Am Ende können auch Längs- und Querschwingungen überlagert oder gemeinsam betrachtet werden.

Aus den Schwingungen 804 wird dann über einen Analyseblock 806 eine 1P-Komponente bestimmt, die hier als 1PM bezeichnet wird. Mit dem "M" soll angedeutet werden, dass dies die 1P-Komponente der Messung ist.

Zur Identifikation ist ein Unwuchtmodell in einem Modellblock 810 vorgesehen, der in einem Modell eine normierte Blattunwucht UB1_{N} eines ersten Rotorblatts berücksichtigt sowie eine normierte Unwucht UB2_{N} eines zweiten Rotorblatts. Beispielsweise kann in beiden Fällen eine Massenunwucht gleicher Amplitude, aber an unterschiedlichen Rotorblättern vorgesehen sein.

Darauf aufbauend wird dann zu jeder der beiden Unwuchten eine 1P-Komponente simuliert, nämlich zu den normierten Unwuchten, die auch als Einheitsunwuchten bezeichnet werden können. Entsprechend gibt der Modellblock dazu eine 1P-Komponente 1P1 des ersten Rotorblatts und eine 1P-Komponente 1P2 des zweiten Rotorblatts aus. Diese können im Komplexe-Ebene-Block 812 vektoriell aufaddiert werden. Dazu sind beide Komponenten 1P1 und 1P2 als Vektor dargestellt und gestrichelt die vektorielle Addition angedeutet. Die 1P-Komponente 1 PM aus der Messung, die der Analyseblock 806 ausgegeben hat, kann ebenfalls in diesem Komplexe-Ebene-Block 812 enthalten sein.

Wie dort in der **Figur 8A** angedeutet, führt die vektorielle Addition der beiden Komponenten 1P1 und 1P2 nicht zur 1P-Komponente 1PM gemäß der erfassten Schwingung. Ziel ist es nun, die beiden 1P1- und 1P2-Komponenten in ihrer Amplitude so zu verändern, dass ihre vektorielle Addition die 1P-Komponente 1PM erreichen.

Dieser Vorgang ist in dem Ablauf 800 durch die beiden Einstellblöcke 821 und 822 zum Einstellen jeweils eines Faktors K1 bzw. K2 veranschaulicht. Insoweit kann durch diese Faktoren K1 und K2 durch Multiplikation mit den beiden 1P-Komponenten 1P1 und 1P2 eine Veränderung des jeweiligen Vektors bzw. Vektorpfeils erreicht werden. Das ist in dem Komplexe-Ebene-Block 812' angedeutet. Die beiden 1P-Komponenten 1P1 und 1P2 sind mit den entsprechenden Faktoren K1 bzw. K2 multipliziert, verändern dadurch ihre Länge, und dadurch kann erreicht werden, dass sie genau die Größe aufweisen, die benötigt wird, um bei vektorieller Addition die 1P-Komponente 1 PM gemäß Messung zu erreichen.

Das wird durch eine bestimmte Konstellation der Faktoren K1 und K2 erreicht, und die sich dabei ergebenden Faktoren K1 und K2 werden insoweit von diesem Komplexe-Ebene-Block 812' veranschaulichend ausgegeben. Die Komplexe-Ebene-Blöcke 812 und 812' sind im Grunde zur Veranschaulichung der vektoriellen Addition gezeigt. Insoweit sind die Blöcke identisch, aber zur Veranschaulichung gibt der Komplexe-Ebene-Block 812 die beiden 1P-Komponenten 1P1 und 1P2 wieder aus, wohingegen der Komplexe-Ebene-Block 812' die beiden Faktoren K1 und K2 ausgibt. Konsequenterweise erhalten beide Komplexe-Ebene-Blöcke 812 und 812' die 1P-Komponente 1PM aus der Messung.

Der im Komplexe-Ebene-Block 812' veranschaulichte Vorgang der Veränderung der Länge der beiden Vektoren der beiden 1P-Komponenten 1P1 und 1P2 ist in dem Ausschnitt gemäß **Figur 8B** dargestellt.

Dort sind als durchgezogene Vektoren die Vektoren 1P1 und 1P2 dargestellt, die also die 1P-Komponenten des ersten und zweiten Rotorblatts für die normierten Unwuchten bzw. Einheitsunwuchten wiedergeben. Ihre vektorielle Addition führt zu der überlagerten 1P-Komponente 1P12.

Wie veranschaulicht ist, unterscheidet sich die überlagerte 1P-Komponente 1P12 von der gesuchten 1P-Komponente 1 PM des erfassten Signals. Entsprechend werden die beiden 1P-Komponenten 1P1 und1P2 mit dem Faktor K1 bzw. K2 multipliziert, um ihre Länge zu verändern. Diese Längenveränderung ist gestrichelt dargestellt. Die in der Länge veränderten Vektoren sind überlagert, also aufaddiert, was durch den gestrichelten Vektor 1P12K dargestellt ist. Dieser überlagerte Vektor 1 P12K erreicht die 1P-Komponente 1 PM des gemessenen Schwingungssignals. Dass sie diese 1P-Komponente 1PM erreicht, wird dadurch geschafft, dass die beiden Faktoren K1 und K2 entsprechend gewählt werden, um die ursprünglichen, also Einheits-1P-Komponenten 1P1 und 1P2 genau so zu strecken, dass ihre vektorielle Überlagerung die 1P-Komponente 1PM des gemessenen Signals erreicht.

Vorsorglich wird darauf hingewiesen, dass die Faktoren K1 und K2 in dem Beispiel offensichtlich größer als 1 sind, sie können aber auch kleiner als 1 sein und sie können auch negativ sein.

Die nun so gefundenen Werte für die Faktoren K1 und K2 führen im Grunde unmittelbar zum Ergebnis der Identifikation der Unwucht. Das ist in dem Diagramm A, also Figur 8A, angedeutet. Die erste Unwucht UB1, die gesucht ist, ist nämlich der Faktor K1 multipliziert mit der normierten Unwucht UB1_{N} des ersten Rotorblatts, also die Einheitsunwucht des ersten Rotorblatts. Entsprechend ist die zweite Unwucht UB2, also die Unwucht des zweiten Rotorblatts, die gesucht ist, der zweite Faktor K2 multipliziert mit der Einheitsunwucht UB2_{N} des zweiten Rotorblatts, also K2 multipliziert mit der Einheitsunwucht des zweiten Rotorblatts.

## Patentansprüche

1. Verfahren zum Identifizieren einer Rotorunwuchtkonstellation eines Rotors einer Windenergieanlage, wobei die Windenergieanlage einen Turm mit einem Turmkopf und der Rotor eine Rotorachse und mehrere, in ihrem Blattwinkel verstellbare Rotorblätter aufweist und das Verfahren umfasst
- Erfassen von Schwingungssignalen als zeitliche Signalverläufe über einen Erfassungszeitraum, wobei wenigstens
- ein Längsschwingungssignal erfasst wird, das eine Schwingung des Turmes in einer Längsrichtung, längs zur Rotorachse wiedergibt, und/oder
- ein Querschwingungssignal erfasst wird, das eine Schwingung des Turmes in einer Querrichtung, quer zur Rotorachse wiedergibt,
- Bestimmen von 1P-Komponenten aus den erfassten Schwingungssignalen, wobei jeweils
- eine 1P-Längsschwingungskomponente aus dem Längsschwingungssignal bestimmt wird und/oder
- eine 1P-Querschwingungskomponente aus dem Querschwingungssignal bestimmt wird, wobei
- die 1P-Komponenten so bestimmt werden, dass sie jeweils eine Information über Betrag und Phase enthalten, und sich die Phase jeweils auf eine Drehposition des Rotors bezieht,
- Bestimmen der Unwuchtkonstellation aus den 1P-Komponenten, wobei die Unwuchtkonstellation eine Massenunwucht und eine Blattwinkelunwucht, die eine aerodynamische Unwucht bezeichnet, umfassen kann, und
- das Bestimmen der Unwuchtkonstellation in Abhängigkeit von wenigstens einem Unwuchtmodell erfolgt.

2. Verfahren nach Anspruch 1, **dadurch gekennzeichnet, dass**
- das wenigstens eine Unwuchtmodell jeweils eine Unwuchtkonstellation mit zugehörigen 1P-Komponenten umfasst, die vorbestimmt oder bestimmbar sind, und insbesondere
- das wenigstens eine Unwuchtmodell als Referenz verwendet wird, um unter Berücksichtigung des wenigstens einen Unwuchtmodells und den aus den erfassten Schwingungssignalen bestimmten 1P-Komponenten auf die zu identifizierende Rotorunwuchtkonstellation zu schließen, oder sich ihr anzunähern und/oder, dass
- die 1P-Komponenten jeweils mit Betrag und Phase oder als komplexe Zahl mit Realteil und Imaginärteil bestimmt und/oder verwendet werden.

3. Verfahren nach Anspruch 1 oder 2, **dadurch gekennzeichnet, dass**
- zusammen mit dem Erfassen des Längsschwingungssignals und/oder des Querschwingungssignals ein Rotorpositionssignal über denselben Erfassungszeitraum als zeitlicher Verlauf einer Rotorposition in Drehrichtung des Rotors erfasst wird, wobei optional
- als Nullposition eine Rotorposition verwendet wird, bei der ein Lastsignal bei einer Lastmessung im Leerlauf sein Vorzeichen ändert, und
- das Bestimmen der 1P-Längsschwingungskomponente aus dem Längsschwingungssignal und der 1P-Querschwingungskomponente aus dem Querschwingungssignal jeweils in Abhängigkeit von dem Rotorpositionssignal erfolgt.

4. Verfahren nach einem der vorstehenden Ansprüche, **dadurch gekennzeichnet, dass**
- das Erfassen der Schwingungssignale und optional das Erfassen des Rotorpositionssignals, und das Bestimmen der 1P-Komponenten, ggf. in Abhängigkeit vom Rotorpositionssignal, für weitere Erfassungszeiträume wiederholt wird, sodass
- mehrere 1P_Komponenten, insbesondere mehrere 1P-Komponenten-Paare bestimmt werden, jeweils wenigstens eine 1P-Komponente bzw. ein 1P-Komponenten-Paar für jeden Erfassungszeitraum, wobei jedes 1P-Komponenten-Paar eine 1P-Längsschwingungskomponente und eine 1P-Querschwingungskomponente aufweist.

5. Verfahren nach einem der vorstehenden Ansprüche, **dadurch gekennzeichnet, dass**
- für mehrere Erfassungszeiträume und unterschiedliche Windgeschwindigkeiten jeweils die Schwingungssignale erfasst und daraus jeweils 1P-Komponenten-Paare bestimmt werden, und
- die so bestimmten 1P-Komponenten-Paare in Abhängigkeit von der Windgeschwindigkeit, bei der die zugehörigen Schwingungssignale jeweils erfasst wurden, in Bins einsortiert werden und
- das Bestimmen der Unwuchtanteile in Abhängigkeit von den in die Bins eingeteilten 1P-Komponenten-Paaren erfolgt.

6. Verfahren nach einem der vorstehenden Ansprüche, **dadurch gekennzeichnet, dass**
- mehrere Unwuchtmodelle mit unterschiedlichen Unwuchtkonstellationen verwendet werden und
- die Unwuchtmodelle überlagert werden, indem
- ihre Unwuchtkonstellationen zu einer gemeinsamen Unwuchtkonstellation als Prüfunwuchtkonstellation überlagert werden und
- die zugehörigen 1P-Komponenten zu wenigstens einer 1P-Vergleichskomponente oder 1P-Vergleichskomponenten-Paar überlagert werden,
- die Unwuchtkonstellationen der einzelnen Unwuchtmodelle in ihrer Amplitude verändert werden, um dadurch die Prüfunwuchtkonstellation und die 1P-Vergleichskomponenten zu variieren, und
- die Unwuchtkonstellationen der Unwuchtmodelle derart verändert werden, dass die sich damit verändernden 1P-Vergleichskomponenten möglichst gut mit den aus den erfassten Schwingungssignalen bestimmten 1P-Komponenten übereinstimmen, wobei insbesondere
- die Prüfunwuchtkonstellation, die zur besten Übereinstimmung zwischen 1P-Vergleichskomponenten und aus den erfassten Schwingungssignalen bestimmten 1P-Komponenten führt, als zu identifizierende Rotorunwuchtkonstellation verwendet wird.

7. Verfahren nach einem der vorstehenden Ansprüche, **dadurch gekennzeichnet, dass**
- vier Unwuchtmodelle zum Bestimmen der Unwuchtkonstellation verwendet werden, von denen
- ein erstes Unwuchtmodell eine erste Massenunwucht an einem ersten Rotorblatt aufweist,
- ein zweites Unwuchtmodell eine zweite Massenunwucht an einem zweiten Rotorblatt aufweist, wobei die erste und zweite Massenunwucht vorzugsweise gleich groß sind,
- ein drittes Unwuchtmodell eine erste Blattwinkelunwucht an dem ersten oder anderen Rotorblatt aufweist,
- ein viertes Unwuchtmodell eine zweite Blattwinkelunwucht an dem zweiten oder anderen Rotorblatt aufweist, solange es nicht dem Rotorblatt entspricht, an dem das dritte Unwuchtmodell die Blattwinkelunwucht aufweist, wobei die erste und zweite Blattwinkelunwucht vorzugsweise gleich groß sind und
- von den vier Unwuchtmodellen ihre Unwuchtkonstellationen in ihrer Amplitude variiert und überlagert werden, um dadurch möglichst viele unterschiedliche Prüfunwuchtkonstellationen durchprüfen zu können.

8. Verfahren nach einem der vorstehenden Ansprüche, **dadurch gekennzeichnet, dass**
- für mehrere Windgeschwindigkeiten jeweils 1P-Komponenten bestimmt werden, sodass die 1P-Komponenten wenigstens einen von der Windgeschwindigkeit abhängigen 1P-Komponenten-Verlauf bilden und
- das wenigstens eine Unwuchtmodell zu seiner Unwuchtkonstellation mehrere 1P-Komponenten umfasst, die wenigstens einen, von der Windgeschwindigkeit abhängigen 1P-Komponenten-Verlauf bilden und insbesondere
- zum Identifizieren der Unwuchtkonstellation
- wenigstens zwei Unwuchtmodelle überlagert werden, so dass ihre Unwuchtkonstellationen zu einer bzw. der Prüfunwuchtkonstellation überlagert werden,
- ihre 1P-Komponenten zu 1P-Prüfkomponenten überlagert werden,
- die 1P-Prüfkomponenten wenigstens einen von der Windgeschwindigkeit abhängigen 1P-Prüfkomponenten-Verlauf bilden, und
- die Unwuchtkonstellationen der überlagerten Unwuchtmodelle so in ihrer Amplitude variiert werden, dass der wenigstens eine 1P-Prüfkomponenten-Verlauf möglichst gut mit dem wenigstens einen 1P-Komponenten-Verlauf übereinstimmt, der aus den erfassten Schwingungssignalen bestimmt wurde.

9. Verfahren nach einem der vorstehenden Ansprüche, **dadurch gekennzeichnet, dass**
- die 1P-Komponenten nach Betrag und Phase als Zahl in der komplexen Zahlenebene in Polarkoordinaten interpretiert und in die algebraische Form mit Real- und Imaginärteil transformiert werden,
- 1P-Komponenten des wenigstens einen Unwuchtmodells ebenfalls in die algebraische Form mit Real- und Imaginärteil transformiert werden und
- das Bestimmen der Unwuchtkonstellation in Abhängigkeit von dem wenigstens einen Unwuchtmodell durch Vergleich der 1P-Komponenten in der komplexen Zahlenebene in der algebraischen Form erfolgt, wobei insbesondere
- von der Windgeschwindigkeit abhängige 1P-Komponentenverläufe verglichen werden.

10. Verfahren nach einem der vorstehenden Ansprüche, **dadurch gekennzeichnet, dass**
- das Erfassen der Schwingungssignale und Bestimmen der 1P-Komponenten
- wenigstens über mehrere Tage, insbesondere über mehrere Wochen und weiter insbesondere über mehrere Monate wiederholt wird und/oder
- wenigstens über einen Zeitraum wiederholt wird, in dem die Windgeschwindigkeit wenigstens um 30% bezogen auf eine Nennwindgeschwindigkeit variiert.

11. Verfahren nach einem der vorstehenden Ansprüche, **dadurch gekennzeichnet, dass**
- als Schwingungssignale
- jeweils eine Turmschwingung im Bereich des Turmkopfes erfasst wird, insbesondere
- jeweils ein Beschleunigungssignal des Turmkopfes erfasst wird.

12. Verfahren nach einem der vorstehenden Ansprüche, **dadurch gekennzeichnet, dass**
- beim wiederholten Erfassen der Schwingungssignale zum Bestimmen der 1P-Komponenten ein dabei jeweils vorliegender Betriebspunkt der Windenergieanlage, insbesondere **gekennzeichnet durch** eine Rotordrehzahl und/oder erzeugte Leistung und/oder gemeinsamen Blattwinkel und/oder erfasste Windgeschwindigkeit, aufgenommen und im Unwuchtmodell zur Bestimmung von 1P-Modellkomponenten berücksichtigt wird, und/oder
- eine Resonanzfrequenz der Windenergieanlage, insbesondere des Turmes, oder eine dafür repräsentative Größe, aufgenommen wird und im Unwuchtmodell zur Bestimmung der 1P-Modellkomponenten berücksichtigt wird.

13. Verfahren zum Kompensieren wenigstens einer Unwucht eines Rotors einer Windenergieanlage, wobei die Windenergieanlage einen Turm mit einem Turmkopf und der Rotor eine Rotorachse und mehrere, in ihrem Blattwinkel verstellbare Rotorblätter aufweist und das Verfahren umfasst
- Identifizieren einer Unwuchtkonstellation
- in Abhängigkeit von wenigstens einem Unwuchtmodell,
- in Abhängigkeit von wenigstens einer 1P-Längsschwingungskomponente, die jeweils aus einem erfassten Längsschwingungssignal bestimmt wurde, und
- in Abhängigkeit von wenigstens einer 1P-Querschwingungskomponente, die jeweils aus einem erfassten Querschwingungssignal bestimmt wurde, und
- Verändern des Rotors derart, dass wenigstens eine Unwucht der identifizierten Unwuchtkonstellation reduziert wird.

14. Verfahren nach Anspruch 13, **dadurch gekennzeichnet, dass**
- die Unwuchtkonstellation mit einem Verfahren gemäß einem der Ansprüche 1 bis 12 identifiziert wurde und/oder
- zum Reduzieren einer Massenunwucht wenigstens eine Ausgleichsmasse an einem Rotorblatt angeordnet oder entfernt und/oder in Position und/oder Größe verändert wird, und/oder
- zum Reduzieren einer Blattwinkelunwucht wenigstens ein Blattwinkel eines der Rotorblätter verändert wird.

15. Verfahren nach Anspruch 13 oder 14, **dadurch gekennzeichnet, dass**
- nach dem Verändern des Rotors zur Reduzierung der Unwucht die Identifikation der Unwuchtkonstellation wiederholt wird und/oder
- das Verändern des Rotors zur Reduzierung der Unwucht nach einer erneuten Identifikation der Unwuchtkonstellation wiederholt wird, und/oder
- das Verändern des Rotors und Identifizieren der Unwuchtkonstellation mehrfach, wenigstens 2-, 3- oder 5-mal wiederholt wird.

16. Verfahren nach einem der Ansprüche 13 bis 15, **dadurch gekennzeichnet, dass**
- das Identifizieren automatisch initiiert wird, insbesondere nach vorbestimmten Startkriterien, und/oder über eine Fernwartung initiiert wird, und/oder
- das Verändern des Rotors zum Reduzieren wenigstens einer Unwucht automatisch, über eine Fernwartung und/oder Fernbedienung initiiert wird.

17. Windenergieanlage, vorbereitet zum Identifizieren einer Rotorunwuchtkonstellation und optional zum Kompensieren wenigstens einer Rotorunwucht, wobei
- die Windenergieanlage dazu vorbereitet ist, ein Verfahren gemäß einem der vorstehenden Ansprüche auszuführen, wobei insbesondere
- die Windenergieanlage einen Steuerungscomputer zum Steuern der Windenergieanlage oder eines Teils davon aufweist und ein Verfahren zum Identifizieren einer Rotorunwuchtkonstellation und ggf. ein Verfahren zum Kompensieren einer Rotorunwucht auf dem Steuerungscomputer implementiert ist, wobei optional
- Aktuatoren zum Verändern des Rotors zum Verändern wenigstens einer Unwucht vorgesehen sind.
